# EUROPÄISCHE PATENTSCHRIFT

(11) **EP 1 957 360 B1**
(45) Veröffentlichungstag und Bekanntmachung des Hinweises auf die Patenterteilung: **27.07.2011**
(21) Anmeldenummer: 06828593.1
(22) Anmeldetag: 01.12.2006
(51) Int. Cl.: B64C 1/14

(54) **LUFTFAHRZEUG-DRUCKKABINENTÜR AUS FASERVERBUNDWERKSTOFF**
AIRCRAFT PRESSURIZED CABIN DOOR MADE OF FIBER COMPOSITE MATERIAL
PORTE DE CABINE PRESSURISEE DESTINEE A UN AERONEF ET REALISEE EN MATIERE COMPOSITE RENFORCEE PAR DES FIBRES

(30) Priorität: 02.12.2005 DE 102005057907
(43) Veröffentlichungstag der Anmeldung: 20.08.2008
(73) Patentinhaber: EUROCOPTER DEUTSCHLAND GmbH, 86609 Donauwörth (DE)
(72) Erfinder: HÄNSCH, Peter, 86391 Stadtbergen (DE); MÜLLER, Reinhard, 86157 Augsburg (DE); BRAUN, Richard, 86703 Rögling (DE); SCHMIEDEL, Patrik, 86609 Donauwörth (DE)
(74) Vertreter: GPI & Associés
(86) Internationale Anmeldenummer: PCT/DE2006/002138
(87) Internationale Veröffentlichungsnummer: WO 2007/062641

(56) Entgegenhaltungen:
- EP-A- 1 216 816
- EP-A2- 1 231 046
- DE-A1- 10 035 334
- DE-A1- 10 109 638
- US-A- 5 242 523

## Beschreibung

### TECHNISCHES GEBIET

Die vorliegende Erfindung betrifft eine Luftfahrzeug-Druckkabinentür aus Faserverbundwerkstoff.

Luftfahrzeug-Druckkabinentüren im Allgemeinen sind der Fachwelt bekannt. Die Offentegungsschrift DE 100 35334 A1 zeigt beispielweise eine Druckkabinentür gemäß dem Oberbegriff des Anspruchs 1 und stellt dem nächstliegenden Stand der Technik dar.

### DARSTELLUNG DER ERFINDUNG

Der Erfindung liegt die Aufgabe beziehungsweise das technische Problem zugrunde, eine Luftfahrzeug-Druckkabinentür aus Faserverbundwerkstoff zu schaffen, die einfach und vorzugsweise weitgehend automatisiert zu fertigen ist und die über ein möglichst geringes Gewicht und eine hohe Festigkeit und Formbeständigkeit auch unter Kabineninnendruck-Belastung verfügt.

Diese Aufgabe wird gelöst durch eine erfindungsgemäße Luftfahrzeug-Druckkabinentür mit den Merkmalen des Anspruchs 1.

Diese Luftfahrzeug-Druckkabinentür mit einer Höhen-, Breiten- und Tiefenrichtung, umfasst eine integrale Türstruktur-Einheit aus Faserverbundwerkstoff (nachfolgend auch FVW abgekürzt), die eine Außenhaut und ein auf der Innenseite der Außenhaut angeordnetes Türgerüst aufweist, welches als wesentliche tragende Elemente Randträger und in Breitenrichtung verlaufende Längsträger besitzt, die sich zwischen den Randträgern erstrecken, wobei Türgerüst-Zwischenräume, die von der Innenseite der Außenhaut, den Randträgern und den Längsträgern begrenzt sind, zur Türinnenseite hin offen ausgebildet sind.

Unter einer Druckkabinentür ist im Sinne der Erfindung jegliche durch einen in einem Rumpf eines Luftfahrzeugs oder dessen Druckkabine oder dessen Anbaukomponenten herrschenden Innendruck beaufschlagte Tür zu verstehen, insbesondere eine Passagiertür, ein Frachttor, eine Fluchtluke bzw. Notausstiegstür, eine Wartungsklappe, und dergleichen. Sofern es sich bei der Druckkabinentür um eine Passagiertür oder eine Frachttür handelt, so ist diese vorzugsweise als sogenannte Plug-In-Tür ausgestaltet.

Als Faserverbundwerkstoff kommt vorzugsweise ein Kohlefaserverbundwerkstoff zur Anwendung. Auch Verbundwerkstoffe mit anderen Fasertypen sowie Mischfasern sind möglich und insbesondere in Teilbereichen der Luftfahrzeug-Druckkabinentür vorgesehen.

Randträger können an nur zwei gegenüberliegenden Rändern der Tür (vorzugsweise an dem linken und rechten Rand) oder aber an allen Rändern (d.h. dem linken, rechten, oberen und unteren Rand) der Tür ausgebildet sein. Im letztgenannten Fall ergibt sich eine rahmenartige Randträgerstruktur. Falls eine rahmenartige Randträgerstruktur vorhanden ist, kann jeweils ein oberster oder unterster Längsträger einen oberen und/oder unteren Teil dieser Randträgerstruktur bilden. Die Türgerüst-Zwischenräume dienen neben weiteren, nachfolgend noch näher beschriebenen Funktionen, primär der Schaffung von Zwischen- oder Hohlräumen für den Einbau einer sog. Türkinematik mit Betätigungs- und Antriebseinrichtungen (insbesondere Hebe- und Schwenkeinrichtungen, Verriegelungseinrichtung, Kraftübertragungselemente, Betätigungselemente, Aktuatoren, usw.) sowie ggf. für Notfallausrüstung. Die Längsträger sind vorzugsweise an ihren Enden mit den Randträgern integral verbunden. Die Randträger besitzen in Tiefenrichtung der Tür gemessen vorzugsweise die gleiche Höhe wie die Längsträger.

Die Struktur der erfindungsgemäßen Luftfahrzeug-Druckkabinentür (nachfolgend auch kurz Tür genannt) ist im Wesentlichen auf die Außenhaut, die Längsträger und die Randträger reduziert, was einen einfachen Aufbau der Tür gestattet. Die erfindungsgemäße Luftfahrzeug-Druckkabinentür aus Faserverbundwerkstoff ist daher einfach herzustellen, insbesondere auch in automatisierten Fertigungsverfahren wie z.B. der RTM-Technik (RTM = Resin Transfer Moulding). Sie verfügt ferner über ein gegenüber konventionellen Druckkabinentüren reduziertes Gewicht bei einer erhöhten Festigkeit und Formstabilität auch unter Kabineninnendruck. Die oben geschilderte Konzept der erfindungsgemäßen Tür gestattet es hierbei, die Türstruktur fasergerecht aufzubauen und die Vorteile einer Faserverbundwerkstoffkonstruktion voll auszunutzen. Die maßgeblichen lastabtragenden Verbindungen innerhalb der Türstruktur lassen sich durch tragende Faserstrukturen bzw. entsprechende Laminatbereiche fasergerecht und hochfest ausführen. Auf diese Weise kann die integrale Türstruktur-Einheit aus Faserverbundwerkstoff alle relevanten Lasten wie z.B. den im Betrieb des Luftfahrzeugs auf der Tür lastenden Kabinen-Innendruck sowie die durch Druckbeaufschlagung und Verformungen des Luftfahrzeugrumpfes bzw. benachbarter Rumpfstrukturen auftretenden Türverformungen optimal aufnehmen.

Die zur Türinnenseite hin offen ausgebildeten Türgerüst-Zwischenräume tragen neben der Schaffung der oben genannten Einbauräume darüber hinaus zu einer einfacheren Herstellbarkeit, insbesondere zu einem einfacheren Lagenaufbau, der Türstruktur-Einheit aus Faserverbundwerkstoff bei. Sie definieren eine vorbestimmte Fertigungszugangsrichtung. Die Türstruktur-Einheit lässt sich überdies einfach abwickeln. Somit können bei der Herstellung der Tür die einzelnen Faser- bzw. Gewebelagen auch automatisiert gelegt werden; und die Lagen bzw. die Faserstruktur der Türstruktur-Einheit (z.B. in Gestalt eines komplexeren Faservorformlings) lässt sich leicht in eine beim RTM-Verfahren verwendete RTM-Form bzw. Negativform einpassen.

Die erfindungsgemäße Tür kann insbesondere gegenüber konventionellen Aluminiumtüren in Differentialbauweise mit einem reduzierten technischen Fertigungsaufwand kostengünstig hergestellt werden.

Weitere bevorzugte und vorteilhafte Ausgestaltungsmerkmale der erfindungsgemäßen Luftfahrzeug-Druckkabinentür sind Gegenstand der Unteransprüche.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Perspektivansicht einer erfindungsgemäßen Luftfahrzeug-Druckkabinentür gemäß einer ersten Ausführungsform mit Blick auf die einer Kabine eines Luftfahrzeugs zugewandten Innenseite der Tür;
- Fig. 2a: eine schematische Draufsicht in Tiefenrichtung der Tür von Fig. 1, entsprechend einer Blickrichtung gemäß Pfeil II in Fig. 1;
- Fig. 2b: eine schematische Querschnittsansicht der Tür von Fig. 1 und 2a entlang der in Höhenrichtung der Tür verlaufenden Linie A - A in Fig. 2a;
- Fig. 2c: eine schematische Querschnittsansicht der Tür von Fig. 1 und 2a entlang der in Breitenrichtung der Tür verlaufenden Linie C - C in Fig. 2a;
- Fig. 3: eine schematische Darstellung der Einzelheit B aus Fig. 2b;
- Fig. 4a: eine schematische Darstellung der Einzelheit D aus Fig. 2c;
- Fig. 4b: eine schematische Darstellung eines Teilbereichs einer erfindungsgemäßen Luftfahrzeug-Druckkabinentür gemäß einer zweiten Ausführungsform in analoger Darstellungsweise zur Fig. 4a;
- Fig. 5: eine schematische Darstellung eines Teilbereichs einer erfindungsgemäßen Luftfahrzeug-Druckkabinentür gemäß einer dritten Ausführungsform, in analoger Darstellungsweise zu Fig. 3;
- Fig. 6: eine schematische Darstellung eines Teilbereichs einer erfindungsgemäßen Luftfahrzeug-Druckkabinentür gemäß einer vierten Ausführungsform, in analoger Darstellungsweise zu Fig. 3 und 5;
- Fig. 7: eine schematische Perspektivansicht einer erfindungsgemäßen Luftfahrzeug-Druckkabinentür gemäß einer fünften Ausführungsform, in analoger Darstellungsweise zu Fig. 1; und
- Fig. 8: eine schematische Darstellung eines Teilbereichs einer erfindungsgemäßen Luftfahrzeug-Druckkabinentür gemäß einer sechsten Ausführungsform, in analoger Darstellungsweise zu Fig. 3.

### DARSTELLUNG VON BEVORZUGTEN AUSFÜHRUNGSBEISPIELEN

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich oder sinnvoll ist.

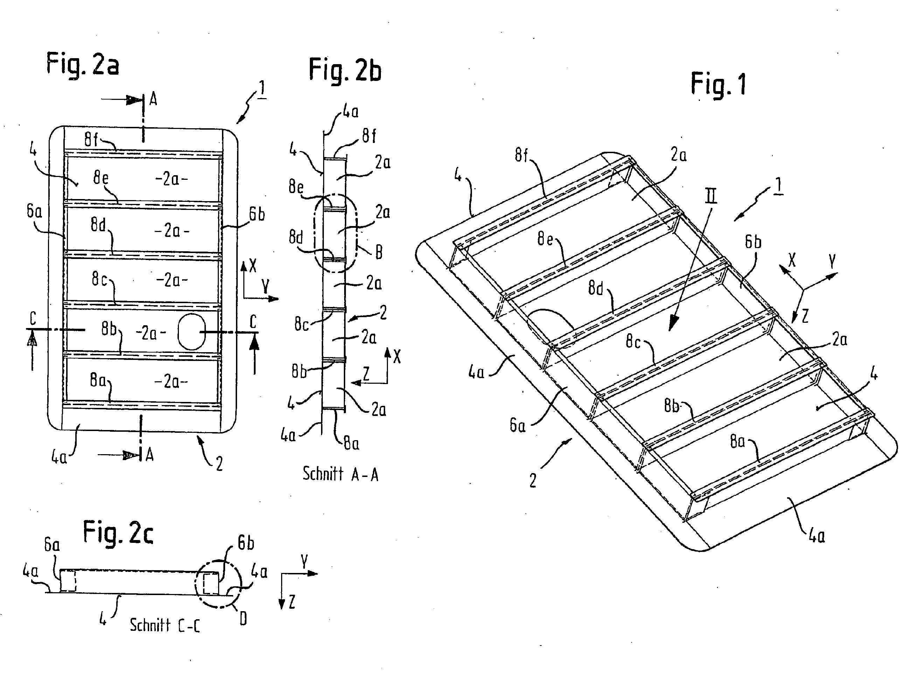

In der Fig. 1 ist in einer schematischen Perspektivenansicht eine erste Ausführungsform einer erfindungsgemäßen, als Passagiertür ausgestalteten Luftfahrzeug-Druckkabinentür 1 (nachfolgend kurz Tür 1 genannt) dargestellt. Die Tür 1 verfügt über eine Höhenrichtung X, eine Breitenrichtung Y und Tiefenrichtung Z. Diese Richtungen sind in den Zeichnungen durch ein kartesisches Koordinatensystem angedeutet. Der Betrachter der Fig. 1 blickt auf die Innenseite der Tür 1 bzw. deren Türstruktur, die, wenn die Tür 1 in einen Rumpf eines Luftfahrzeugs (nicht gezeigt) eingebaut ist, dem Innenraum bzw. der Kabine des Luftfahrzeugrumpfes zugewandt ist. Fig. 2a zeigt eine schematische Draufsicht in Tiefenrichtung Z der Tür von Fig. 1, entsprechend einer Blickrichtung gemäß Pfeil II in Fig. 1. Fig. 2b zeigt eine schematische Querschnittsansicht der Tür von Fig. 1 und 2a entlang der in Höhenrichtung X der Tür 1 verlaufenden Linie A - A in Fig. 2a. Und Fig. 2c zeigt eine schematische Querschnittsansicht der Tür 1 von Fig. 1 und 2a entlang der in Breitenrichtung Y verlaufenden Linie C - C in Fig. 2a. Obwohl die Tür 1 in diesen Zeichnungen als ein im Wesentlichen planes Bauteil skizziert ist, ist sie in Realität in der Regel leicht gekrümmt bzw. als schalenartiges Element ausgebildet und an die Kontur eines Ausschnitts des zumeist röhrenförmig ausgestalteten Luftfahrzeugrumpfes angepasst.

Die Tür 1 verfügt über eine integrale Türstruktur-Einheit 2 aus Faserverbundwerkstoff (FVW), die eine Außenhaut 4 und ein auf der Innenseite der Außenhaut 4 angeordnetes Türgerüst aufweist. Dieses Türgerüst besitzt als wesentliche tragende Elemente ausschließlich seitliche Randträger 6a, 6b und in Breitenrichtung verlaufende Längsträger 8a bis 8f, die sich zwischen den Randträgern 6a, 6b erstrecken. Sofern die Tür 1, wie zuvor erwähnt, eine gekrümmte Form aufweist, verlaufen ihre Hauptkrümmungsachsen vorzugsweise im Wesentlichen parallel zu den Längsträgern 8a bis 8f.

Gemessen in Tiefenrichtung Z der Tür 1 weisen die Randträger 6a, 6b die gleiche oder im Wesentlichen die gleiche Höhe wie die Längsträger 8a bis 8f auf. Türgerüst-Zwischenräume 2a, die von der Innenseite der Außenhaut 4, den Randträgern 6a, 6b und den Längsträgern 8a bis 8f begrenzt sind, sind zur Türinnenseite hin offen ausgebildet. Die Türgerüst-Zwischenräume 2a bilden somit eine Art Wanne. Im vorliegenden Beispiel sind nur die in der Fig. 1 auf der linken und rechten Türseite befindlichen Träger 6a, 6b Randträger, während die an der Türoberseite und Unterseite angeordneten Träger 8a und 8f Längsträger sind, die hier jedoch gleichzeitig die Funktion von oberen und unteren Randträgern übernehmen. Somit ergibt sich eine rahmenartige Trägerstruktur mit insgesamt sechs Längsträgern 8a bis 8f. Je nach Größe der Tür 1 sowie nach Anwendung kann die Anzahl der Längsträger natürlich variieren. Die Längsträger 8a bis 8f sind an ihren jeweiligen Enden mit den Randträgern 6a, 6b integral verbunden. Um diese rahmartige Trägerstruktur herum bildet die Außenhaut 4 einen flanschartigen Türrand 4a.

Der Faserverbundwerkstoff der erfindungsgemäßen Tür 1 ist in diesem Ausführungsbeispiel ein Kohlefaser-Verbundwerkstoff (CFK). Dieser Faserverbundwerkstoff kann, insbesondere in Teilbereichen der Tür 1, bei Bedarf auch Zusatzfasern enthalten, die vorzugsweise ausgewählt sind aus einer Gruppe von Zusatzfasern, umfassend: Glasfasern, Aramidfasern, Borfasern. Ebenso ist es möglich, Teilbereiche der Tür 1 bzw. der rahmenartigen Trägerstruktur 2 gänzlich aus einem anderen FVW als CFK auszubilden.

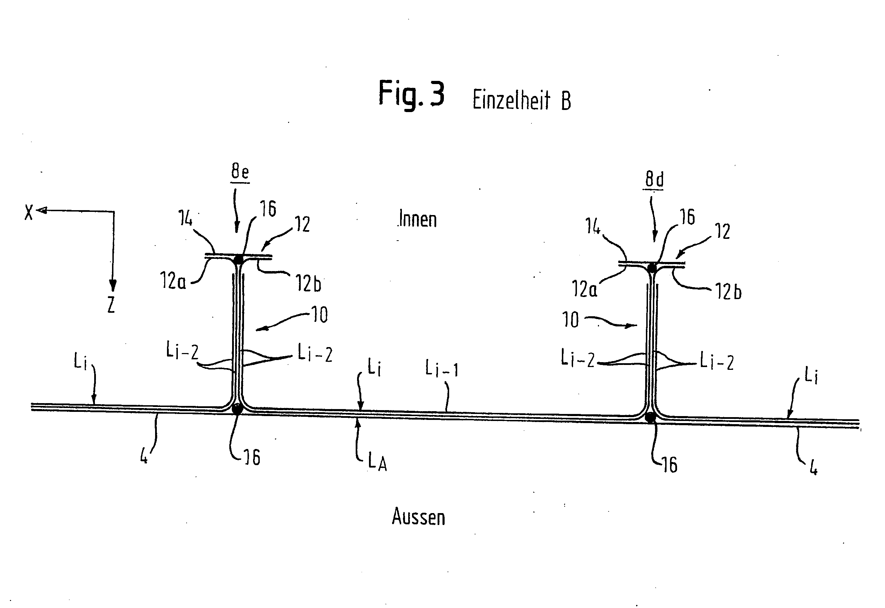

Fig. 3 ist eine schematische Darstellung der Einzelheit B aus Fig. 2b. In dieser Zeichnung ist als Beispiel der zwischen zwei benachbarten Längsträgern 8d, 8e der integralen Türstruktur-Einheit 2 befindlichen Teilbereich der erfindungsgemäßen Tür 1 skizziert. Aus der Fig. 3 wird insbesondere der Faserverbundwerkstoff-Lagenaufbau der erfindungsgemäßen Tür 1 bzw. ihrer FVW-Türstruktur-Einheit 2 deutlich. Die Türstruktur-Einheit 2 besitzt ein Faserverbundwerkstoff-Lagenaufbau, der bei Betrachtung der Tür 1 in einem in der Höhenrichtung X verlaufenden Querschnitt, wie er in Fig. 3 gezeigt ist, zumindest folgende Lagen aus FVW aufweist: mindestens eine äußere Decklage L_{A}, die einen äußeren Bereich der Außenhaut 4 bildet und über diese hinweg einen vorzugsweise durchgehenden, ununterbrochenen Faserverlauf besitzt; und mehrere auf der Innenseite der äußeren Decklage L_{A} in Höhenrichtung Z nebeneinander angeordnete ein- oder mehrschichtige Innenlagen Lᵢ mit jeweils einem im Wesentlichen U-förmigen Querschnitt. Da in der Fig. 3 nur zwei benachbarte Längsträger 8d und 8e dargestellt sind, ist in dieser Zeichnung auch nur ein U-förmiger Querschnitt der Innenlage Lᵢ vollständig erkennbar. Für die jeweils benachbarten Längsträger bzw. für einen benachbarten Randträger ist die Anordnung jedoch entsprechend.

Die U-förmige Innenlage Lᵢ besitzt einen Boden Lᵢ₋₁ und zwei seitliche, sich in der Fig. 3 in Tiefenrichtung Z erstreckende Schenkel Lᵢ₋₂. Der Boden Lᵢ₋₁ ist flächig mit der Innenseite der äußeren Decklage L_{A} verbunden und bildet einen inneren, der Kabineninnenseite des Luftfahrzeugs zugewandten Bereich der Außenhaut 4. Jeweils zwei benachbarte seitliche Schenkel Lᵢ₋₂, Lᵢ₋₂ von zwei benachbarten U-förmigen Innenlagen Lᵢ sind flächig mit einem dazwischen angeordneten Längsträger (hier 8d und 8e) verbunden und bilden auf Grund der integralen FVW-Bauweise zumindest einen Teilbereich desselben.

Insbesondere die äußere Decklage L_{A} und die Innenlagen Lᵢ können ein- oder mehrschichtig aufgebaut sein. Sie verfügen vorzugsweise über ihre gesamte Fläche hinweg über einen durchgehenden Faserverlauf. Die äußere Decklage L_{A} erstreckt sich vorzugsweise durchgehend über mehrere Längsträger 8a bis 8f hinweg. Aus der Fig. 3, die nur den Bereich um die zwei benachbarten Längsträger 8d und 8e herum darstellt, ist erkennbar, dass sich dort die äußere Decklage L_{A} über die zwei benachbarten Längsträger 8d, 8e hinweg erstreckt.

Wie aus der Fig. 3 des Weiteren hervor geht, besitzen die Längsträger 8a bis 8f in diesem Ausführungsbeispiel einen T-förmigen Querschnitt. Dieser Querschnitt besitzt einen mit der Außenhaut 4 bzw. deren Decklage L_{A} verbundenen Steg 10 und einen sich an den Steg 10 anschließenden Gurt 12. Der Gurt 12 ist an demjenigen Ende des Stegs 10 angeordnet, welcher der Außenhaut 4 abgewandt und der zur Kabineninnenseite zugewandt ist. Jeweils zwei benachbarte seitliche Schenkel Lᵢ₋₂ von zwei benachbarten, U-förmigen Innenlagen Lᵢ sind flächig miteinander verbunden und bilden zusammen einen wesentlichen Teilbereich des Stegs 10 eines jeweiligen Längsträgers 8a bis 8f, wie deutlich in der Fig. 3 zu sehen ist. Die zwei benachbarten seitlichen Schenkel Lᵢ₋₂ können entweder - wie in der Fig. 3 angedeutet - direkt miteinander verbunden sein oder auch indirekt, d.h. zum Beispiel über eine dazwischenliegende FVW-Lage oder aber auch eine dazwischen liegende Sandwich-Zwischenlage.

Die der Außenhaut 4 abgewandte freien Enden 12a, 12b der beiden seitlichen Schenkel Lᵢ₋₂ bilden den Gurt 12 des T-förmigen Querschnitts. Hierzu sind die freien Enden 12a, 12b gegenläufig (d.h. hier einmal nach links und einmal nach rechts) abgewinkelt und formen so zusammen den Gurt 12. Zusätzlich ist auf diesem Gurt 12 noch eine streifenförmige Faserverbundwerkstoff-Deckschicht 14 angeordnet, welche die beiden gegenläufig abgewinkelten freien Enden 12a, 12b der Schenkel integral miteinander verbindet. Diese Deckschicht 14 erstreckt sich vorzugsweise über die gesamte Breite des Gurtes 12 und vorzugsweise auch über dessen gesamte Länge.

Zwischen der Deckschicht 14 und den gegenläufig abgewinkelten freien Enden 12a, 12b der Schenkel Lᵢ₋₂ ist im vorliegenden Ausführungsbeispiel zusätzlich eine optionale unidirektionale Faseranordnung 16 (bzw. eine FVW-Schicht oder ein FVW-Gelege mit entsprechender unidirektionaler Faseranordnung) positioniert, die sich in Längsrichtung des betreffenden Längsträgers 8a bis 8f erstreckt.

Darüber hinaus ist zwischen der mindestens einen äußeren Decklage L_{A} und einem dieser Decklage L_{A} zugeordneten Fußbereich des Stegs 10 des T-förmigen Längsträgers 8a bis 8f eine entsprechende unidirektionale Faseranordnung 16 optional vorgesehen. Die beiden vorher genannten unidirektionalen Faseranordnungen 16 sind in der Fig. 3 jeweils durch einen Vollkreis angedeutet. In Realität besitzen diese unidirektionalen Faseranordnungen 16 jedoch vorzugsweise eine flache, flächige, streifenförmige Gestalt.

Grundsätzlich kann der Gurt 12 auch durch eine L-förmige Abwinkelung gebildet werden. Die Enden 12a, 12 werden dann gleichsinnig abgewinkelt und übereinandergelegt. In mindestens einer Ausführungsformen ist es dann auch möglich; auf die Decklage 14 und ggf. sogar die unidirektionale Faseranordnung 16 zu verzichten.

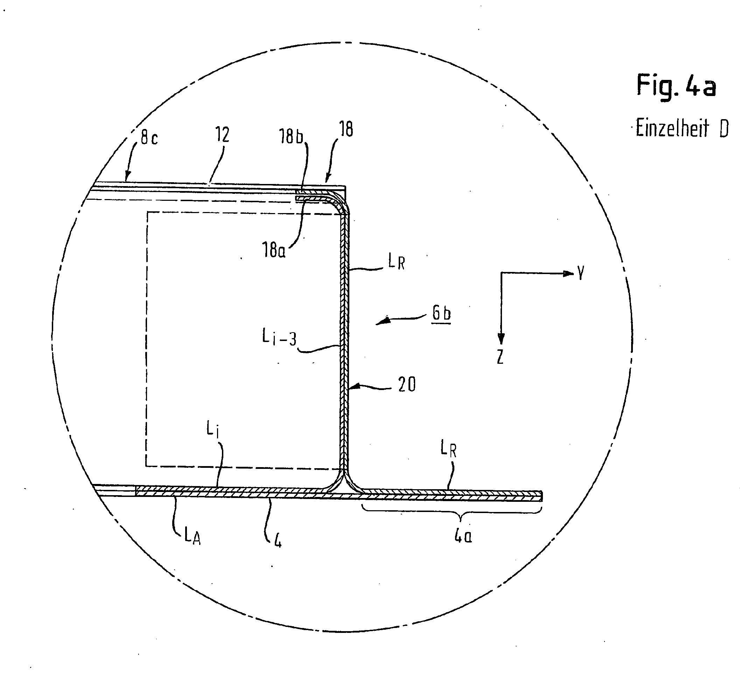

Fig. 4a zeigt eine schematische Darstellung der Einzelheit D aus Fig. 2c. In dieser Zeichnung ist der Lagenaufbau der integralen Türstruktur-Einheit 2 aus FVW im Bereich eines seitlichen Randträgers 6b erkennbar. Ein weiterer seitlicher Schenkel Lᵢ₋₃ (hier in Breitenrichtung Y) von wenigstens einer der benachbarten Innenlagen Lᵢ, die über den im Wesentlichen U-förmigen Querschnitt verfügen, bildet eine innere Seitenwand des Randträgers 6b, die dem gegenüberliegenden seitlichen Randträger 6a (in Fig. 4a nicht gezeigt) zugewandt ist. Von dem besagten U-förmigen Querschnitt (der bei dreidimensionaler Betrachtung eine wannenförmige Innenlage Lᵢ bildet) ist in der Fig. 4a nur ein rechter Teilbereich dargestellt. Der seitliche Schenkel Lᵢ₋₃, der hier die linke Seitenwand des Randträgers 8a formt, ist an seinem der Außenhaut 4 abgewandten freien Ende 18a L-förmig abgewinkelt und formt einen Teil eines Gurtes 18 des Randträgers 6b. Die besagte linke innere Seitenwand wiederum formt einen Teil eines Stegs 20 des Randträgers 6b.

Auf der in der Fig. 4a rechten Seite der durch den Schenkel Lᵢ₋₃ gebildeten Seitenwand des Stegs 20 ist mindestens eine weitere, äußere FVW-Lage L_{R} vorgesehen, welche im Bereich des Stegs 20 die in der Fig. 4a rechte Seitenwand des Randträgers 6b bildet. Diese FVW-Lage L_{R} ist in dem Bereich des Gurtes 18 ebenfalls L-förmig abgewinkelt (18b) und integral mit dem gleichsinnig L-förmig abgewinkelten Bereich 18a des Schenkels Lᵢ₋₃ verbunden. Im Fußbereich des Stegs 20 ist die FVW-Lage L_{R} L-förmig nach rechts abgewinkelt und integral mit der äußeren Decklage L_{A} der Außenhaut 4 verbunden. Zusammen mit der äußeren Decklage L_{A} bildet die FVW-Lage L_{R} hier somit den flanschartigen Randbereich 4a der Türstruktur-Einheit 2 aus. Ähnlich wie bei den Längsträgern 8a bis 8f (vgl. Fig. 3) können auch bei den Randträgern unidirektionale Faseranordnungen 16 in entsprechender Anordnung an dem Gurt 18 und/oder im Fußbereich des Stegs 20 vorgesehen sein (in Fig. 4a nicht gezeigt).

Die freien Enden 18a und 18b können grundsätzlich auch gegenläufig abgewinkelt und bei Bedarf mit einer FVW-Deckschicht 14 versehen werden, so dass sich ein Randträgerquerschnitt ergibt, der dem Querschnitt der Längsträger in Fig. 3 ähnelt.

In Hintergrund der Fig. 4a ist des Weiteren ein Teilbereich eines der sich in Breitenrichtung Y der Tür 1 erstreckenden Längsträgers 8c erkennbar. Dieser Längsträger 8c ist mit dem in Fig. 4a dargestellten Randträger 6b sowohl am Gurt 18, am Steg 20 als auch an dessen Fußbereich verbunden und bildet am Übergangsbereich zwischen diesen beiden Trägern eine solide, integrale Eckverbindung aus.

Die Konstruktion der in den Fig. 3 und 4a nicht gezeigten Längs- und Randträger sowie deren Anbindung an die Außenhaut 4 ist entsprechend der vorangegangenen Beschreibung in einer im Wesentlichen gleichen Art und Weise ausgeführt.

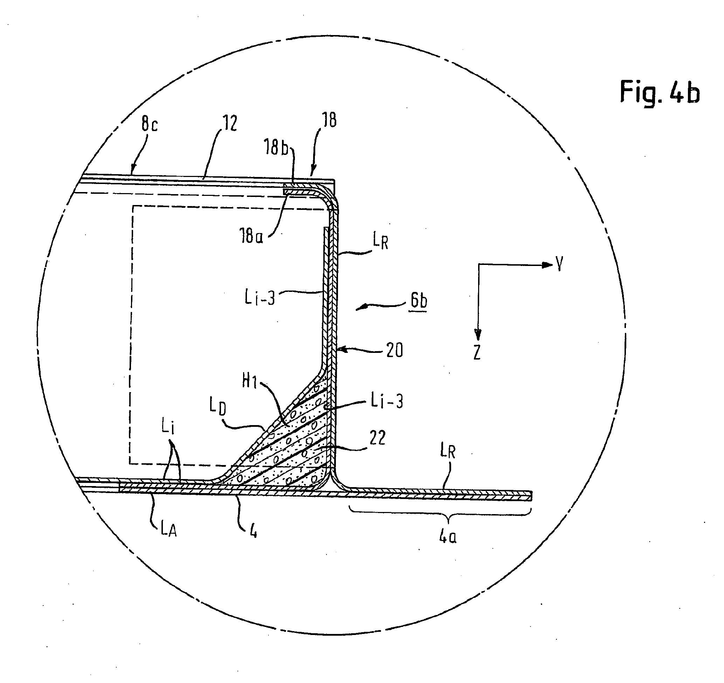

Fig. 4b zeigt in analoger Darstellungsweise zur Fig. 4a eine schematische Darstellung eines Teilbereichs einer erfindungsgemäßen Luftfahrzeug-Druckkabinentür gemäß einer zweiten Ausführungsform. Diese zweite Variante entspricht im Wesentlichen der gemäß Fig. 4a. Im Gegensatz dazu ist jedoch an der innenseitigen Ecke, an welcher der Fußbereich des Stegs 20 des Randträgers 6b (bzw. 6a) mit der Außenhaut 4 verbunden ist, eine von einem Teilbereich der Innenlage Lᵢ und dem Schenkel Lᵢ₋₃ gebildete FVW-Diagonallage L_{D} vorgesehen. Diese Diagonallage L_{D} verbindet die innere Seitenfläche des Stegs 20 mit der Außenhaut 4 bzw. deren äußere Decklage L_{A}. Ferner formt die FVW-Diagonallage L_{D} zusammen mit der Außenhaut 4 und dem Steg 20 im Bereich der Ecke ein Hohlprofil H1. Das Hohlprofil H1 ist mit einem Füllmaterial, z.B. einem Schaumstoff 22, ausgefüllt. Das FVW-Material der Diagonallage L_{D} erstreckt sich ausgehend von der Seitenwand des Stegs 20 als weitere Schicht der Innenlage Lᵢ über die Innenseite der Außenhaut 4 hinweg bis vorzugsweise zum gegenüberliegenden Randträger 6a und formt dort eine entsprechend ausgebildete Ecke aus.

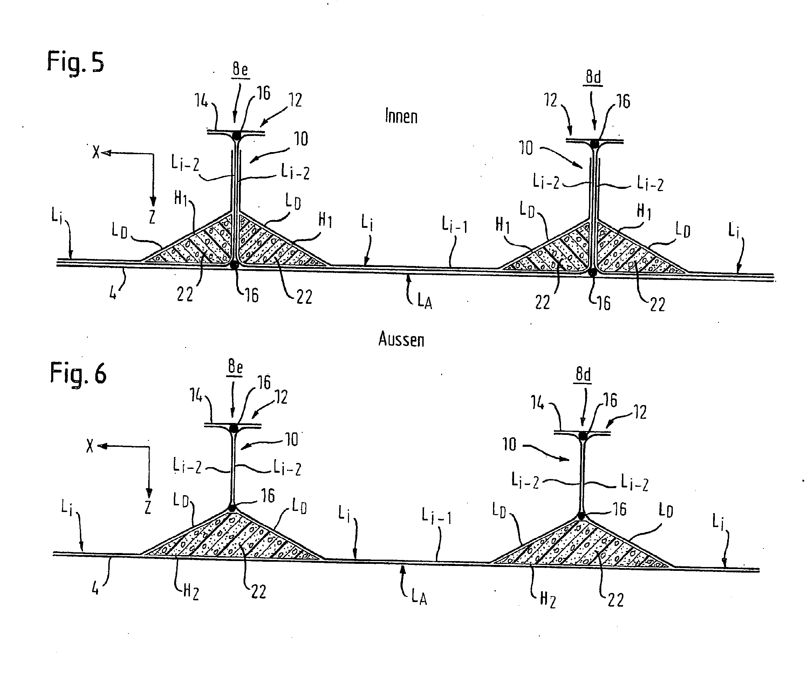

Fig. 5 zeigt eine schematische Darstellung eines Teilbereichs einer erfindungsgemäßen Luftfahrzeugs-Druckkabinentür gemäß einer dritten Ausführungsform. Die Darstellungsweise der Fig. 5 ist analog zu der gemäß Fig. 3 und zeigt wiederum einen entsprechenden Teilbereich des in Höhenrichtung X verlaufenden Querschnitts der Tür. Ähnlich wie bei dem Randträger 6b der Fig. 4b, ist an einer zwischen der jeweiligen Innenseite der Außenhaut 4 und einer angrenzenden Seitenfläche (bzw. dem Steg 10) eines Längsträgers 8d, 8e gebildeten Ecke eine von einem Teilbereich der Innenlage Lᵢ gebildete FVW-Diagonallage L_{D} vorgesehen. Diese Diagonallage L_{D} verbindet die Seitenfläche (bzw. den Steg 10) und die Außenhaut 4 bzw. deren äußere Decklage L_{A} miteinander und bildet zusammen mit der Außenhaut im Bereich der Ecke ein Hohlprofil H1 aus.

Diese FVW-Diagonallagen L_{D} sind bei Längsträgern 8b bis 8e, die wie die in der Fig. 5 gezeigten Längsträger 8d und 8e keinen oberen oder unteren Randträger (hier: 8a und 8f; vgl. Fig. 1 und Fig. 2a) ausbilden, auf beiden Seiten des Stegs 10 vorgesehen. Somit ist auf beiden Seiten des Stegs 10 jeweils ein entsprechendes Hohlprofil H1 vorhanden. Dieses Hohlprofil H1 besitzt in diesem Fall einen im Wesentlichen dreieckigen Profilquerschnitt. Obwohl die FVW-Diagonallage L_{D} in der Fig. 5 im Querschnitt geradlinig verläuft, kann sie in bestimmten Anwendungsfällen auch bogenförmig gekrümmt sein. Die Diagonallage L_{D} kann hierbei insbesondere konkav ausgebildet sein, d.h. sie kann sich zum Fußpunkt des Steges 10 hin wölben. Das FVW-Material der Diagonallage L_{D} erstreckt sich ausgehend von einer Seitenwand des Stegs 10 als weitere Schicht der Innenlage Lᵢ über die Innenseite der Außenhaut 4 hinweg bis vorzugsweise zum jeweils benachbarten Längsträger und formt dort eine entsprechend ausgebildete Ecke aus. Im vorliegenden Beispiel ist das Hohlprofil H1 mit einem Füllmaterial ausgefüllt. Bei diesem Füllmaterial handelt es sich zum Beispiel um einen Schaumkern 22 oder einen Wabenkern.

Ecken an den Randträgern 6a, 6b können bei Bedarf entsprechend ausgestaltet sein (vgl. auch Fig. 4b).

Die durchgehenden Fasern insbesondere auf der Innenseite der Tür, d.h. die Fasern der jeweiligen Innenlage Lᵢ sowie die seitlichen Schenkel Lᵢ₋₂ und die Diagonallagen L_{D} leiten die Last des Kabineninnendrucks aus der Außenhaut 4 über die Versteifungen, die durch die Hohlprofile H1 und die Schaumkerne 22 gebildet sind, in die Träger 6a, 6b und 8a bis 8f ein. Die innere Lage Lᵢ und die äußere Decklage L_{A} sowie die seitlichen Schenkel Lᵢ₋₂ und die Diagonallagen L_{D} verhindern ein Aufschälen des FVW-Lagenaufbaus der Träger 6a, 6b und 8a bis 8f bzw. der Trägeranbindungen unter der Belastung des Kabineninnendrucks.

Fig. 6 zeigt in analoger Darstellungsweise zu den Fig. 3 und 5 eine schematische Darstellung eines Teilbereichs einer erfindungsgemäßen Luftfahrzeug-Druckkabinentür gemäß einer vierten Ausführungsform. Bei Betrachtung der Tür in dem in Fig. 6 gezeigten, in Höhenrichtung X verlaufenden Querschnitt besitzen die Längsträger 8d, 8e einen sich zur Außenhaut 4 hin verbreiternden Fußbereich, der mit der Außenhaut 4 verbunden ist und zusammen mit dieser ein Hohlprofil H2 bildet. Dieses Hohlprofil H2 besitzt einen dreieckigen und vorzugsweise gleichschenkligen Querschnitt. Das Hohlprofil H2 wird zumindest von der äußeren Decklage L_{A} sowie von jeweils zwei benachbarten seitlichen Schenkeln (hier: die Diagonallagen L_{D}) von zwei benachbarten Innenlagen Lᵢ begrenzt. Der Unterschied zwischen der Ausgestaltungsweise nach Fig. 5 und 6 besteht darin, dass bei der Variante nach Fig. 6 der Steg 10 nicht bis auf die Außenhaut 4 durchgezogen ist, sondern sich vor dieser mindestens einmal gabelt und so zwei gleiche Schenkel des gleichschenkligen Querschnitts des Hohlprofils H2 bildet. Im Gabelbereich kann eine unidirektionale Faseranordnung 16 vorgesehen sein. Auch das Hohlprofil H2 in Fig. 6 ist mit einem Schaumkern 22 ausgefüllt.

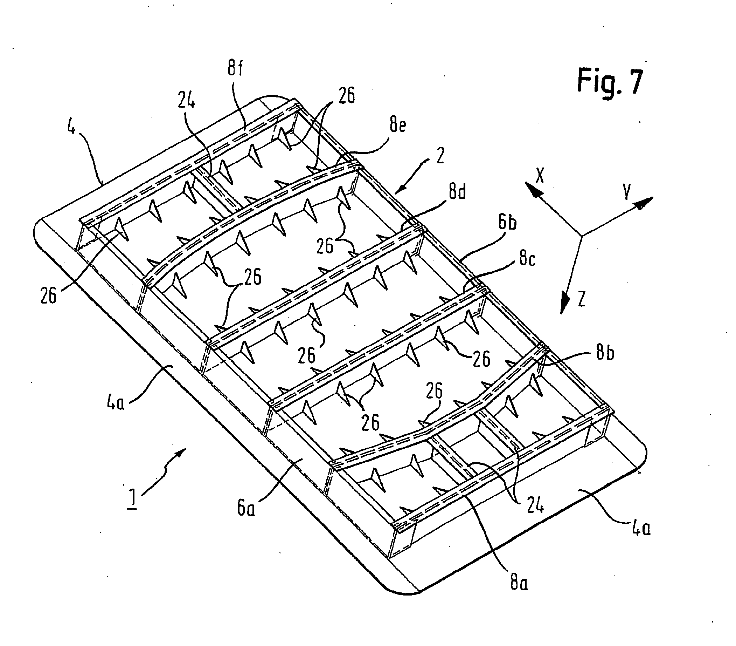

Fig. 7 zeigt eine schematische Perspektivansicht einer erfindungsgemäßen Luftfahrzeug-Druckkabinentür 1 gemäß einer fünften Ausführungsform. Die Darstellungsweise der Fig. 7 ist analog zu derjenigen der Fig. 1. Der Aufbau der Tür 1 nach Fig. 7 entspricht im Wesentlichen der nach Fig. 1. Davon abweichend, sind jedoch zwei der Längsträger 8a bis 8f, d.h. hier der zweite und der fünfte Längsträger 8b und 8e von unten, in Höhenrichtung X der Tür 1 bogenartig nach gewölbt oder abgewinkelt. Bei dem unteren (8b) dieser beiden Längsträger 8b, 8e erstreckt sich die Abwinkelung bzw. Auswölbung zur Unterkante der Tür 1 hin, während sich die Wölbung des oberen (8e) der beiden Längsträger 8b, 8e zur Oberkante der Tür 1 hin krümmt. Auf diese Weise kann der Zwischenraum zwischen zwei benachbarten Längsträgern (hier: 8b und 8c; 8d und 8e) vergrößert und dadurch eine größere lokale Einbauhöhe für eine Türkinematik oder dergleichen geschaffen werden. Auch zwei direkt benachbarte Längsträger können vorzugsweise in entgegengesetzten Richtungen in der zuvor beschriebenen Art und Weise gekrümmt bzw. abgewinkelt sein. Insbesondere je nach Art und Größe der Tür sowie des erforderlichen Einbauraums für Türelemente kann die Anzahl der so gekrümmten bzw. abgewinkelten Längsträger variieren.

Wie aus der Fig. 7 des Weiteren hervorgeht, ist zwischen dem ersten und zweiten benachbarten Längsträger 8a, 8b sowie zwischen dem fünften und sechsten benachbarten Längsträger 8e, 8f mindestens ein Türspantsegment 24 angeordnet, welches mit diesen jeweils zwei benachbarten Längsträgern und der Außenhaut 4 verbunden ist und die Querstabilität der daran angeschlossenen Längsträger vergrößert. Ein jeweiliges Türspantsegment 24 erstreckt sich vorzugsweise im Wesentlichen in Höhenrichtung X der Tür 1 und im Wesentlichen parallel zu den seitlichen Randträgern 6a, 6b bzw. in einem schrägen Winkel dazu. Ein jeweiliges Türspantsegment 24 kann entweder integraler Bestandteil der FVW-Türstruktur-Einheit 2 sein oder aber auch als Differentialbauteil ausgestaltet sein, welches separat mit der Türstruktur-Einheit 2 verbunden wird. Im vorliegenden Ausführungsbeispiel sind die Türspantsegmente 24 als FVW-Differentialbauteile ausgestaltet, welche mit den jeweils zwei benachbarten Längsträgern 8a, 8b und 8e, 8f und der Außenhaut 4 durch ein Haftmittel, insbesondere ein Klebemittel, wie z.B. ein Epoxydharz, nachträglich verbunden sind. Grundsätzlich können die Türspantsegment 24 jedoch auch als integraler Bestandteil der FVW-Türstruktur-Einheit 2 ausgestaltet sein.

Zwischen zwei benachbarten Längsträgern kann darüber hinaus eine Fensterrahmenstruktur (nicht gezeigt) in der FVW-Türstruktur-Einheit 2 ausgeformt sein. Die Fensterrahmenstruktur kann hierbei ein integrales Bauteil oder auch ein Differentialbauteil der Türstruktur-Einheit 2 bilden. Es ist zudem vorgesehen, dass in mindestens einer erfindungsgemäßen Ausführungsform zwei benachbarte Türspantsegmente 24 sowie die daran angeschlossenen Längsträger einen Teil dieser Fensterrahmenstruktur bilden.

Aus der Fig. 7 ist ferner erkennbar, dass die Türstruktur-Einheit 2 aus FVW eine Vielzahl von vorzugsweise integralen, rippenartigen Außenhaut-Versteifungen 26 aufweist, die sich ausgehend von einem jeweiligen Längsträger 8a bis 8f auf der Innenseite der Außenhaut 4 erstrecken. Die Hauptrichtung dieser Versteifungen 26 verläuft im Wesentlichen in Höhenrichtung X der Tür 1 bzw. im Wesentlichen rechtwinkelig zu den Längsträger 8a bis 8f bzw. in einem Winkel dazu. Die Versteifungen 26 können grundsätzlich auch Verzweigungen aufweisen. Ferner ist es möglich, Versteifungen 26 auch an den Türspantsegmenten 22 und/oder den Randträgern 6a, 6b vorzusehen. Diese Versteifungen 26 ermöglichen es, die im Betrieb eines Luftfahrzeugs infolge des Kabineninnendrucks auf die Tür 1 wirkenden Drucklasten insbesondere besser in die Längsträger 8a bis 8f einzuleiten und ein übermäßiges Auswölben der zwischen benachbarten Längsträgern 8a bis 8f und den seitlichen Randträgern 6a, 6b befindlichen Bereiche der Außenhaut 4 zu verhindern.

Zur Herstellung einer erfindungsgemäßen Tür gemäß den Ausführungsform nach Fig. 1 bis 7 wird vorzugsweise eine mit einer verschließbaren Öffnung versehene Negativform verwendet, deren Formboden der Außenhaut 4 der Tür zugeordnet ist. Über die vorzugsweise oberhalb des Formbodens angeordnete Öffnung der Negativform, welche die Fertigungszugangsrichtung definiert, können dann die einzelnen trockenen Faserlagen (z.B. in Form von Geweben, Gewirken, Gestricken, unidirektionalen Faseranordnungen, sowie Mischformen daraus) des späteren FVW-Werkstoffes der Tür beginnend mit der äußeren Decklage L_{A}, dann den U-förmigen Innenlagen Lᵢ, usw., nacheinander eingelegt und zur Faserstruktur der integralen Türstruktur-Einheit 2 aufgebaut werden. Zur Stützung z.B. der für die Stege 10, 20 und Gurte 12, 18 der Längs- und Randträger vorgesehenen Faserlagen können Formkeme, z.B. aus einem wasserlöslichen, später wieder auswaschbaren Material, eingelegt werden.

Nach dem Schließen der Negativform kann die FVW-Tür bzw. ihre integrale FVW-Türstruktur-Einheit 2 dann in einem RTM-Verfahren in "einem Schuss" durch Injizieren eines geeigneten Harzes, z.B. Epoxydharz, geformt und ausgehärtet werden. Anstelle des sukzessiven Aufbaus der einzelnen Faserlagen ist es auch möglich, einen vorgefertigten trockenen Faservorformling oder mehrere größere vorgefertigte trockene Faser-Untervorformlinge zu verwenden, welche bereits der Faserstruktur und dreidimensionalen Gestalt der anzufertigenden integralen Türstruktur-Einheit 2 weitgehend oder in Teilbereichen angepasst sind. Auf diese Weise lässt sich die Anzahl der zu handhabenden und in die Negativform einzulegenden Faserteile erheblich reduzieren. In einem alternativen Herstellungsverfahren (kein RTM-Verfahren) können zum Zwecke des Lagenaufbaus anstelle trockener Faserlagen auch sog. Prepregs verwendet werden, bei denen die Fasern bzw. Faseranordnungen bereits mit einem teilweise ausgehärteten Harz getränkt sind, das später z.B. in einem Autoklaven unter Wärmeeinwirkung vollständig ausgehärtet wird. Die erfindungsgemäße Tür lässt sich somit in einem weitgehend automatisierbaren Herstellungsprozess fertigen.

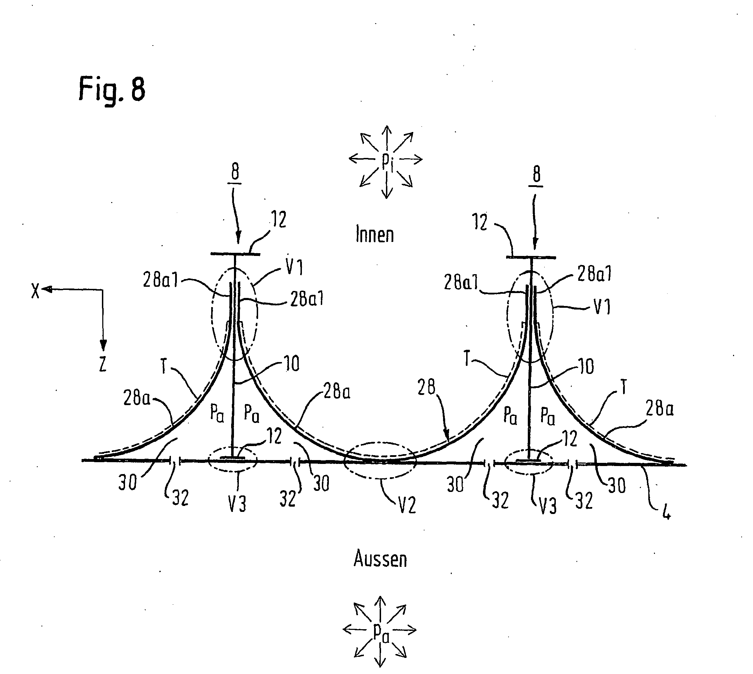

Fig. 8 zeigt eine schematische Darstellung eines Teilbereichs einer erfindungsgemäßen Luftfahrzeug-Druckkabinentür gemäß einer sechsten Ausführungsform. Die Darstellungsweise von Fig. 8 ist analog zu der von Fig. 3. Anders als bei der Konstruktion nach Fig. 3 kann bei dieser Ausführungsform nach Fig. 8 auf die U-förmigen Innenlagen Lᵢ verzichtet werden.

Bei der Variante gemäß Fig. 8 besitzt die Tür eine gasdicht mit der integralen Türstruktur-Einheit 2 aus FVW verbundene Innenhaut 28, welche die Tür, wenn sich diese in einem in das Luftfahrzeug bzw. dessen Rumpf eingebauten Zustand befindet, gegenüber der den Rumpf umgebenden Atmosphäre abdichtet. Die Längsträger 8 sind als Doppel-T-Träger bzw. sog. I-Träger ausgebildet. Die Randträger (nicht gezeigt) können gleichartig ausgestaltet oder ähnlich wie in Fig. 4a und 4b auch mit einem L-förmigen Profilquerschnitt versehen sein. Der in der Fig. 8 untere Gurt 12 der Längsträger 8 ist einfach auf die Innenseite der Außenhaut 4 aufgeklebt. Die Innenhaut 28 besitzt zwischen jeweils zwei benachbarten Längsträgern 8 einen gewölbeartig geformten, den Kabineninnendruck pᵢ abtragenden Druckschalenabschnitt 28a. Die Wölbung des Druckschalenabschnitts 28a erstreckt sich ausgehend von der Türinnenseite in Tiefenrichtung Z zur Türaußenseite hin. Sofern der zu einem Längsträger 8 benachbarte Träger ein oberer oder unterer Randträger ist, so ist dieser gewölbeartig geformte Druckschalenabschnitt 28a vorzugsweise auch jeweils zwischen diesem Längsträger 8 und seinem benachbarten oberen bzw. unteren Randträger vorgesehen. In dem in Fig. 8 gezeigten Ausschnitt ist nur ein einzelner Druckschalenabschnitt 28a zwischen zwei benachbarten Längsträger 8 vollständig dargestellt. Die benachbarten Druckschalenabschnitte 28a sind nur teilweise erkennbar.

Wie aus der Fig. 8 überdies hervor geht, ist ein jeweiliger Druckschalenabschnitt 28a mit seinen Randbereichen 28a1 bzw. Längs- und Querseiten jeweils großflächig mit dem Steg 10 oder einer Seitenwand eines jeweils zugeordneten Längsträgers 8 verbunden. Der Verbindungsbereich ist in der Fig. 8 durch ein mit strichpunktierter Linie dargestelltes Oval sowie den Buchstaben V1 angedeutet. Sofern einer der Randbereiche 28a1 einem oberen bzw. unteren Randträger zugeordnet ist, so ist dieser eine Randbereich 28a1 dann großflächig mit dem jeweils zugeordneten oberen bzw. unteren Randträger bzw. dessen Steg oder Seitenwand verbunden.

Bei dem in Fig. 8 gezeigten Ausführungsbeispiel erstreckt sich die Wölbung eines jeweiligen Druckschalenabschnitts 28a bis auf die Innenseite der Außenhaut 4. Und im Scheitelbereich des gewölbten Druckschalenabschnitts 28a ist dieser mit der Innenseite der Außenhaut 4 verbunden. Dieser Verbindungsbereich ist in der Fig. 8 durch ein mit strichpunktierter Linie dargestelltes Oval sowie den Buchstaben V2 angedeutet. Ausführungsformen, bei denen der Scheitelbereich des Druckschalenabschnitts 28a in eine Abstand zur Innenoberfläche der Außenhaut 4 angeordnet ist und keine Verbindung zwischen dem Scheitelbereich und der Innenseite der Außenhaut 4 besteht, sind erfindungsgemäß ebenfalls vorgesehen.

Wie die integrale Türstruktur-Einheit 2 selbst ist auch die Innenhaut 28 mit ihren gewölbeartig geformten Druckschalenabschnitten 28a aus FVW, vorzugsweise CFK, hergestellt. Die geschlossene Oberfläche des FVW der Innenhaut 28 bzw. der gewölbeartigen Druckschalenabschnitte 28a gewährleistet hierbei die zuvor erwähnte Gasdichtigkeit. Zusätzlich kann die Innenhaut auch mit weiteren Abdichtungselementen, wie z.B. speziellen Dichtungsmittel-Anstrichen oder Dichtungsschichten, Dichtungsfolien, etc., versehen sein. Da die integrale Türstruktur-Einheit 2 einschließlich ihrer Außenhaut 4 und der Innenhaut 28 aus FVW hergestellt ist, kann die Verbindung V2 des Scheitelbereichs des gewölbten Druckschalenabschnitts 28a mit der Innenseite der Außenhaut 4 ebenfalls über eine FVW-Verbindung, z.B. durch eine Klebung mittels Epoxydharz oder dergleichen, erfolgen. Mechanische Befestigungsarten sind ebenfalls denkbar.

Die Anbindung der Innenhaut 28 bzw. ihrer gewölbten Druckschalenabschnitte 28a an die seitlichen Randträger (nicht gezeigt) erfolgt im Wesentlichen auf die gleiche Art und Weise, wie sie in der Fig. 8 für die Längsträger 8 dargestellt ist. Die besagten Druckschalenabschnitte 28a sind daher zu den Randträgern bzw. zu deren Stegen hin vorzugsweise ebenfalls gewölbt bzw. weisen abgerundete Übergange und Ecken auf und sind großflächig mit den seitlichen (bzw. oberen und unteren) Randträgern verbunden. Bei dreidimensionaler Betrachtung besitzt ein jeweiliger gewölbter Druckschalenabschnitt 28a damit eine im Wesentlichen wannenartige oder schalenartigen Form.

Im Betrieb eines mit einer Druckkabine ausgestatteten Luftfahrzeugsrumpfes, in den diese Tür gemäß Fig. 8 eingebaut ist, wird die Tür mit dem in der Druckkabine herrschenden Innendruck pᵢ, der im Flugbetrieb des Luftfahrzeuges und insbesondere auf Reiseflughöhe größer als der umgebende Außendruck pₐ in der Umgebungsatmosphäre ist, beaufschlagt. Die relativ dünne Hautschicht der jeweiligen gewölbten Druckschalenabschnitte 28a wird hierbei im Wesentlichen nur durch Zugkräfte beansprucht, die entlang der Wölbungskurve des Druckschalenabschnitts 28a verlaufen. Aus diesem Grund ist die Faseranordnung in den Druckschalenabschnitten 28a auch vorzugsweise so zu wählen, dass die Fasern diese Zugkräfte optimal aufnehmen können, d.h. der Faserverlauf sollte ebenfalls der Wölbungskurve folgen. An den Seitenränder bzw. Längsseiten der Druckschalenabschnitte 28a erfolgt die Lastübertragung auf die Längsträger 8 bzw. deren Stege 10 oder Seitenwände über eine großflächige FVW- bzw. Klebeverbindung (siehe Bezugszeichen V1). Der Verbindungsbereich V1 zwischen dem Druckschalenabschnitt 28a und dem Steg 10 bzw. der Seitenwand des betreffenden Trägers lässt sich hierbei auf einfache Art und Weise klebe- und fasergerecht ausgestalten, da die Verbindungsstelle bei der gezeigten Beanspruchung lediglich auf Schub belastet wird.

In der Fig. 8 ist die bei dieser Türkonstruktion im Flugbetrieb an der integralen Türstruktur-Einheit 2 auftretende Trennung zwischen Innendruck pᵢ und Außendruck pₐ durch eine gestrichelte Trennlinie T angedeutet.

Wie in der Fig. 8 des Weiteren erkennbar ist, begrenzen die Außenhaut 4 und ein Teilbereich eines jeweiligen Druckabschnitts 28a zusammen mit einem jeweils zugeordneten Längsträger 8 (oder Randträger) jeweils einen gegenüber der Kabineninnenseite der Tür abgedichteten Hohlraum 30. Im Bereich eines jeden dieser Hohlräume 30 ist die Außenhaut 4 mit einer Druckausgleichsöffnung 32 versehen, welche in den betreffenden Hohlraum 30 mündet. Durch diese Druckausgleichsöffnung 32 stehen die Hohlräume 30 folglich mit der Umgebungsatmosphäre in Verbindung. Der Außendruck pₐ, der im Flugbetrieb kleiner als der Innendruck pᵢ ist, herrscht daher auch stets in den besagten Hohlräumen 30. Dies bedeutet, dass der Druck pₐ auf der Außenseite und der Innenseite der Außenhaut 4 stets gleich. Die Außenhaut 4 wird also nicht durch den Kabineninnendruck pᵢ belastet, und die Verbindungsstellen V3 zwischen der Außenhaut 4 und den Längsträger 8 (und Randträgern) sowie die Verbindungsstelle V2 zwischen dem Scheitelpunkt eines Druckschalenabschnitts 28a und der Innenseite der Außenhaut 4 ist vom Innendruck pᵢ im Wesentlichen vollständig entlastet.

Da über die Druckausgleichsöffnung 32 Feuchtigkeit in die Hohlräume 30 eindringen kann, sind die Innenoberflächen der Hohlräume 30 vorzugsweise mit einem geeigneten Schutzmittel, wie z.B. einem Farbanstrich oder dergleichen, versiegelt. Damit Flüssigkeit (Kondenswasser), die sich infolge der Feuchtigkeit in den Hohlräumen 30 ansammelt, abfließen kann, ist ein nicht gezeigter Ablauf vorgesehen.

Bei der erfindungsgemäßen Konstruktion nach Fig. 8 wird der Innendruck pᵢ also durch eine zusätzliche, schalenförmige Innenhaut 28 aufgenommen. Die Anbindung der gewölbeartigen Druckschalenabschnitte 28a dieser Innenhaut 28 an die Träger (in der Fig. 8: die Längsträger 8) erfolgt über eine flächige, im Wesentlichen nur auf Schub beanspruchte Verbindung V1. Die auf die Tür wirkenden Biegekräfte werden durch die Träger aufgenommen. Die Außenhaut 4 selbst wird vom Innendruck pᵢ vollständig entlastet. Sie trägt als Schubfeld zur Steifigkeit der Gesamtstruktur der Tür bei und hat darüber hinaus im Wesentlichen nur Verkleidungsfunktionen. Die äußere Schnittstelle zur Umgebungsatmosphäre bildet die Außenseite der Innenhaut 28 bzw. ihrer Druckschalenabschnitte 28a.

Die Verbindung V3 eines jeweiligen Fußbereichs eines Längsträgers 8 bzw. Randträgers, d.h. hier der Stoss bzw. die flächige Verklebung zwischen dem unteren Gurt 12 des jeweiligen Trägers 8 und der Außenhaut 4, wird bei dieser Konstruktion nur sehr gering belastet, da die Außenhaut 4 nicht mehr auf Biegung infolge des Kabineninnendrucks pᵢ belastet wird. Auch eine Welligkeit der Außenhaut 4 infolge der Innendruckbelastung kann vermieden werden. Dadurch ist eine verbesserte aerodynamische Güte der Außenkontur der Tür erzielbar. Die Anbindung der Außenhaut 4 und der Innenhaut 28 an die jeweiligen Träger lässt sich ebenfalls fasergerecht und klebegerecht gestalten. Ungünstige Schälbeanspruchungen der Verbindungsstellen zwischen den jeweiligen Häuten und den Trägern durch Biegung oder Ausbeulung der Außenhaut 4 unter dem Innendruck pᵢ sind vermeidbar. Dies ist ein besonderer Vorteil, da die Schälbeanspruchung z.B. bei konventionellen genieteten und/oder geklebten Aluminiumkonstruktionen in Differentialbauweise zu einer Verbiegung der Nietköpfe bzw. bei den Klebeverbindungen zu einem Abschälen führt.

Bei konventionellen Konstruktionen kann der dünne Werkstoff der Außenhaut Biegungen auch nur sehr ungünstig aufnehmen. Konventionelle Konstruktionen müssen daher sehr massiv und folglich schwer ausgeführt werden. Die erfindungsgemäße Tür nach Fig. 8 kann diese Nachteile vermeiden. Bei der erfindungsgemäßen Tür ist die Aufnahme des Innendrucks pᵢ, die Kraftübertragung von der als Druckschale dienenden Innenhaut 28 in die Längs- und Randträger sowie die Aufnahme von Biegemomenten hinsichtlich der an eine Leichtbaukonstruktion und eine fasergerechte Gestaltung gestellten Anforderungen optimal. Die Außenhaut 4 selbst bleibt weitgehend unbelastet und hat neben der Funktion als Schubfeld zur Steifigkeitserhöhung im Wesentlichen nur noch eine aerodynamische Verkleidungsfunktion.

Durch den Innendruck pᵢ sind ausschließlich die gewölbten bzw. halbkreis- oder kreisabschnittsförmigen Druckschalenabschnitte 28a belastet. Die Anbindung der Außenhaut 4 an die Träger ist davon unberührt. Dadurch werden ungünstige Schäl- und Biegebeanspruchungen der Klebungen zwischen den Trägern und der Außenhaut 4 ausgeschlossen. Durch ihre gewölbte Geometrie sind die Druckschalenabschnitte 28a ideal zur Aufnahme des Innendrucks pᵢ geeignet. Wie bei Druckbehältern sind sie hauptsächlich auf Zug in Umfangsrichtung (in Fig. 8: entlang der gezeigten Wölbungskurve) beansprucht. Für diesen Lastfall kann ein gewichtsoptimaler Laminataufbau des FVWs ermittelt werden. Dies geschieht z.B. mittels einer isotensoidischen Optimierungen (gleiche Dehnung in einer Fasserrichtung), die auch für rohrförmige druckbeanspruchte Bauteile geeignet ist. Eine Voraussetzung für die Funktion dieses Konzeptes ist, dass in den Hohlräumen 30 zwischen der Außenhaut 4 und den Druckschalenabschnitten 28a immer der Außendruck pₐ herrscht. Dies wird durch die besagten Druckausgleichsöffnungen 32 gewährleistet.

Auf diese Art und Weise kann gegenüber konventionellen Türkonstruktionen eine erhebliche Gewichteinsparung bei gleichzeitig hoher Festigkeit und Steifigkeit erzielt werden. Im Vergleich zu konventionellen Bauweisen entstehen bei gleichem Materialeinsatz niedrigere Spannungen in allen Komponenten, wenn die Tür durch den Innendruck pᵢ belastet wird. Das erfindungsgemäße Türkonzept in FVW-Bauweise ermöglicht eine sowohl steifere als auch leichtere Bauweise. Durch die vollständige Verwendung von FVW ergibt sich eine homogene FVW-Struktur mit einem hohen Werkstoffausnutzungsgrad und einem geringen Gewicht.

Die Erfindung ist nicht auf die obigen Ausführungsbeispiele beschränkt. Im Rahmen des Schutzumfangs kann die erfindungsgemäße Tür vielmehr auch andere als die oben konkret beschriebenen Ausgestaltungsformen annehmen. Insbesondere bei den Ausführungsformen gemäß den Fig. 1 bis 7 kann die Außenhaut 4 auch vollständig oder zumindest teilweise sandwichartig aufgebaut sein. Im letztgenannten Fall ist vorzugsweise ein sich zwischen benachbarten Längsträgern und ggf. Randträgern erstreckender Bereich der Außenhaut 4 sandwichartig aufgebaut und weist einen Sandwichkern, insbesondere einen Schaumkern oder einen Wabenkem, auf, der auf einer Innenseite einer äußeren Deckschicht der Sandwichstruktur der Außenhaut angebracht ist.

Die Türgerüst-Zwischenräume der Tür können auch zur Aufnahme einer thermischen Isolierung und/oder Schallisolation dienen.

Sofern die FVW-Türstruktur-Einheit der erfindungsgemäßen Tür Türspantsegmente aufweist, können sich die Druckschalenabschnitte 28a der Ausführungsform nach Fig. 8 auch zwischen diesen Türspantsegmenten, den Längsträgern und den Randträgern erstrecken und entsprechende Verbindungen zu den Türspantsegmenten aufweisen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeug-Druckkabinentür
- 2: Integrale Türstruktur-Einheit aus Faserverbundwerkstoff
- 2a: Türgerüst-Zwischenräume
- 4: Außenhaut
- 4a: Flanschartiger Türrand
- 4_{a-R}: Zu einem Teil des Türrandes 4a abgewinkeltes Ende von L_{R}
- 6a: Linker Randträger
- 6b: Rechter Randträger
- 8: Längsträger
- 8a-8f: Längsträger
- 10: Steg
- 12: Gurt
- 12a: Zu einem Teil des Gurts 12 abgewinkeltes Ende von Lᵢ₋₂
- 12b: Zu einem Teil des Gurts 12 abgewinkeltes Ende von Lᵢ₋₂
- 14: FVW-Deckschicht von 12
- 16: Unidirektionale Faseranordnung
- 18: Gurt
- 18a: Zu einem Teil des Gurts 18 L-förmig abgewinkeltes Ende von Lᵢ₋₃
- 18b: Zu einem Teil des Gurts 18 L-förmig abgewinkeltes Ende von L_{R}
- 20: Steg
- 22: Schaumkern
- 24: Türspantsegmente
- 26: Außenhaut-Versteifungen
- 28: Innenhaut
- 28a: Gewölbeartiger Druckschalenabschnitt von 28
- 28a1: Randbereich von 28a
- 30: Hohlraum
- 32: Druckausgleichsöffnung

- B: Einzelheit
- D: Einzelheit

- H1: Hohlprofil
- H2: Hohlprofil

- L_{A}: Äußere Decklage
- L_{D}: Diagonallage
- Lᵢ: U-förmige Innenlagen
- Lᵢ₋₁: Boden von Lᵢ
- Lᵢ₋₂: Seitliche Schenkel von Lᵢ (in X-Richtung)
- Lᵢ₋₃: Seitliche Schenkel von Lᵢ (in Y-Richtung)
- L_{R}: Äußere FVW-Lage von 6a, 6b

- pₐ: Außendruck
- pᵢ: Innendruck

- T: Trennlinie zwischen Innendruck und Außendruck

- V1: Verbindungsbereich
- V2: Verbindungsbereich
- V3: Verbindungsbereich

- X: Höhenrichtung
- Y: Breitenrichtung
- Z: Tiefenrichtung

## Patentansprüche

1. Luftfahrzeug-Druckkabinentür (1) mit einer Höhen- (X), Breiten- (Y) und Tiefenrichtung (Z),
**dadurch gekennzeichnet, dass** diese umfasst:
eine integrale Türstruktur-Einheit (2) aus Faserverbundwerkstoff, die eine Außenhaut (4) und ein auf der Innenseite der Außenhaut (4) angeordnetes Türgerüst aufweist, welches als wesentliche tragende Elemente Randträger (6a, 6b) und in Breitenrichtung (Y) verlaufende Längsträger (8; 8a bis 8f) besitzt, die sich zwischen den Randträgern (6a, 6b) erstrecken,
wobei Türgerüst-Zwischenräume (2a), die von der Innenseite der Außenhaut (4), den Randträgern (6a, 6b) und den Längsträgern (8; 8a bis 8f) begrenzt sind, zur Türinnenseite hin offen ausgebildet sind.

2. Luftfahrzeug-Druckkabinentür (1) nach Anspruch 1,
**dadurch gekennzeichnet, dass**
der Faserverbundwerkstoff ein Kohlefaser-Verbundwerkstoff ist.

3. Luftfahrzeug-Druckkabinentür (1) nach Anspruch 1 oder 2,
**dadurch gekennzeichnet, dass**
der Faserverbundwerkstoff Zusatzfasern enthält, die ausgewählt sind aus einer Gruppe von Zusatzfasern, umfassend: Glasfasern, Aramidfasern, Borfasern.

4. Luftfahrzeug-Druckkabinentür (1) nach einem oder mehreren der vorhergenannten Ansprüche,
**dadurch gekennzeichnet, dass**
das Türgerüst neben den Randträgern (6a, 6b) als wesentliche tragende Elemente ausschließlich die sich in Breitenrichtung (Y) der Tür erstreckenden Längsträger (8; 8a bis 8f) aufweist.

5. Luftfahrzeug-Druckkabinentür (1) nach einem oder mehreren der vorhergenannten Ansprüche,
**dadurch gekennzeichnet, dass**
mindestens einer (8b, 8e) der Längsträger (8a bis 8f) in Höhenrichtung (X) bogenartig gewölbt bzw. abgewinkelt ist.

6. Luftfahrzeug-Druckkabinentür (1) nach einem oder mehreren der vorhergenannten Ansprüche,
**dadurch gekennzeichnet, dass**
zwischen zwei benachbarten Längsträgern (8a, 8b; 8d, 8e) mindestens ein sich im Wesentlichen in Höhenrichtung (X) erstreckendes Türspantsegment (24) angeordnet ist, welches mit diesen zwei benachbarten Längsträgern (8a, 8b; 8d, 8e) und der Außenhaut (4) verbunden ist und die Querstabilität der Längsträger (8a, 8b; 8d, 8e) vergrößert.

7. Luftfahrzeug-Druckkabinentür (1) nach einem oder mehreren der vorhergenannten Ansprüche,
**dadurch gekennzeichnet, dass**
das mindestens eine Türspantsegment (24) ein integraler Bestandteil der Türstruktur-Einheit (2) ist.

8. Luftfahrzeug-Druckkabinentür (1) nach einem oder mehreren der vorhergenannten Ansprüche,
**dadurch gekennzeichnet, dass**
das mindestens eine Türspantsegment (24) ein Differentialbauteil ist, welches mit den zwei benachbarten Längsträgern (8a, 8b; 8d, 8e) und der Außenhaut (4) durch ein Haftmittel, insbesondere ein Klebemittel, verbunden ist.

9. Luftfahrzeug-Druckkabinentür (1) nach einem oder mehreren der vorhergenannten Ansprüche,
**dadurch gekennzeichnet, dass**
zwischen zwei benachbarten Längsträgern (8; 8a bis 8f) eine Fensterrahmenstruktur integral in der Türstruktur-Einheit (2) ausgebildet ist.

10. Luftfahrzeug-Druckkabinentür (1) nach einem oder mehreren der vorhergenannten Ansprüche,
**dadurch gekennzeichnet, dass**
die Türstruktur-Einheit (2) eine Vielzahl von integralen rippenartigen Außenhaut-Versteifungen (26) aufweist, die sich ausgehend von einem Längsträger (8a bis 8f) auf der Innenseite der Außenhaut (4) erstrecken.

11. Luftfahrzeug-Druckkabinentür (1) nach einem oder mehreren der vorhergenannten Ansprüche,
**dadurch gekennzeichnet, dass**
die Türstruktur-Einheit (2) einen Faserverbundwerkstoff-Lagenaufbau besitzt, der bei Betrachtung der Tür (1) in einem in Höhenrichtung (X) verlaufenden Querschnitt folgende Lagen aus Faserverbundwerkstoff umfasst:
- mindestens eine äußere Decklage (L_{A}), die einen äußeren Bereich der Außenhaut (4) bildet; und
- mehrere auf der Innenseite der äußeren Decklage (L_{A}) in Höhenrichtung (X) der Tür (1) nebeneinander angeordnete ein- oder mehrschichtige Innenlagen (Lᵢ) mit jeweils einem im Wesentlichen U-förmigen Querschnitt, der einen Boden (Lᵢ₋₁) und mindestens zwei seitliche Schenkel (Lᵢ₋₂; Lᵢ₋₃; L_{D}) besitzt,
wobei
- der Boden (Lᵢ₋₁) flächig mit der Innenseite der äußeren Decklage (L_{A}) verbunden ist und einen inneren Bereich der Außenhaut (4) bildet, und
- mindestens einer der seitlichen Schenkel (Lᵢ₋₂; Lᵢ₋₃; L_{D}) flächig mit einem Längsträger (8; 8a bis 8f) und/oder einem Randträger (6a, 6b) verbunden ist und zumindest einen Teilbereich desselben bildet.

12. Luftfahrzeug-Druckkabinentür (1) nach einem oder mehreren der vorhergenannten Ansprüche,
**dadurch gekennzeichnet, dass**
jeweils zwei benachbarte seitliche Schenkel (Lᵢ₋₂; L_{D}) von zwei benachbarten Innenlagen (L₁) flächig mit einem dazwischen angeordneten Längsträger (8; 8a bis 8f) verbunden sind und zumindest einen Teilbereich (10, 12) desselben bilden.

13. Luftfahrzeug-Druckkabinentür (1) nach einem oder mehreren der vorhergenannten Ansprüche,
**dadurch gekennzeichnet, dass**
- mindestens einer der Längsträger (8; 8a bis 8f) einen T-förmigen Querschnitt mit einem mit der Außenhaut (4) verbundenen Steg (10) und einem an demjenigen Ende des Stegs (10), welcher der Außenhaut (4) abgewandt ist, angeordneten Gurt (12) besitzt;
- jeweils zwei benachbarte seitliche Schenkel (Lᵢ₋₂) von zwei benachbarten Innenlagen (L₁) flächig miteinander verbunden sind und zusammen zumindest einen wesentlichen Teilabschnitt des Stegs (10) bilden; und
- die der Außenhaut (4) abgewandten freien Enden (12a, 12b) der beiden Schenkel (Lᵢ₋₂), die den Steg (10) bilden, gegenläufig abgewinkelt sind und zusammen den Gurt (12) formen.

14. Luftfahrzeug-Druckkabinentür (1) nach Anspruch 13,
**dadurch gekennzeichnet, dass**
auf dem Gurt (12) eine streifenförmige Faserverbundwerkstoff-Deckschicht (14) angeordnet ist, welche die beiden gegenläufig abgewinkelten freien Enden (12a, 12b) der beiden Schenkel (Lᵢ₋₂) integral miteinander verbindet.

15. Luftfahrzeug-Druckkabinentür (1) nach einem oder mehreren der Ansprüche 12 bis 14,
**dadurch gekennzeichnet, dass**
zwischen der Deckschicht (14) und den gegenläufig abgewinkelten freien Enden (12a, 12b) der Schenkel (Lᵢ₋₂) eine sich in Längsrichtung (Y) des Längsträgers (8; 8a bis 8f) erstreckende unidirektionale Faseranordnung (16) vorgesehen ist.

16. Luftfahrzeug-Druckkabinentür (1) nach Anspruch 11,
**dadurch gekennzeichnet, dass**
zwischen der mindestens einen äußeren Decklage (L_{A}) und einem dieser Decklage (L_{A}) zugeordneten Fußbereich des Längsträgers (8; 8a bis 8f) eine unidirektionale Faseranordnung (16) vorgesehen ist.

17. Luftfahrzeug-Druckkabinentür (1) nach einem oder mehreren der vorhergenannten Ansprüche,
**dadurch gekennzeichnet, dass**
ein Schenkel (Lᵢ₋₃) von wenigsten einer der Innenlagen (Lᵢ), die über den im Wesentlichen U-förmigen Querschnitt verfügt, zumindest einen Teilbereich (20) einer inneren Seitenwand eines Randträgers (6a, 6b) bildet.

18. Luftfahrzeug-Druckkabinentür (1) nach Anspruch 17,
**dadurch gekennzeichnet, dass**
der Schenkel (Lᵢ₋₃), der zumindest den Teilbereich (20) der Seitenwand des Randträgers (6a, 6b) bildet, an seinem der Außenhaut (4) abgewandten freien Ende (18a) abgewinkelt ist und Teil eines Gurtes (18) des Randträgers (6a, 6b) formt.

19. Luftfahrzeug-Druckkabinentür (1) nach einem oder mehreren der vorhergenannten Ansprüche,
**dadurch gekennzeichnet, dass**
bei Betrachtung der Tür (1) in einem in Höhenrichtung (X) oder Breitenrichtung (Y) verlaufenden Querschnitt an einer zwischen der Innenseite der Außenhaut (4) und einer angrenzenden Seitenfläche (10; 20)
- eines Längsträgers (8; 8a bis 8f) oder
- eines Randträgers (6a, 6b)
gebildeten Ecke eine Faserverbundwerkstoff-Diagonallage (L_{D}) vorgesehen ist, welche die Seitenfläche (10; 20) und die Außenhaut (4) miteinander verbindet und zusammen mit dieser im Bereich der Ecke ein Hohlprofil (H1; H2) ausbildet.

20. Luftfahrzeug-Druckkabinentür (1) nach einem oder mehreren der vorhergenannten Ansprüche,
**dadurch gekennzeichnet, dass**
ein Hohlprofil (H1) auf beiden Seiten eines der Außenhaut (4) zugeordneten Fußbereichs eines Längsträgers (8a bis 8f) vorgesehen ist.

21. Luftfahrzeug-Druckkabinentür (1) nach einem oder mehreren der vorhergenannten Ansprüche,
**dadurch gekennzeichnet, dass**
bei Betrachtung der Tür in einem in Höhenrichtung (X) verlaufenden Querschnitt mindestens ein Längsträger (8; 8a bis 8f) einen sich zur Außenhaut (4) hin verbreiternden Fußbereich besitzt, der mit der Außenhaut (4) verbunden ist und zusammen mit dieser ein Hohlprofil (H2) bildet, das zumindest von der äußeren Decklage (L_{A}) sowie von jeweils zwei benachbarten seitlichen Schenkeln (Lᵢ₋₂; L_{D}) von zwei benachbarten Innenlagen (Lᵢ) begrenzt ist.

22. Luftfahrzeug-Druckkabinentür (1) nach einem oder mehreren der Ansprüche 20 oder 21,
**dadurch gekennzeichnet, dass**
das Hohlprofil (H1; H2) mit einem Füllmaterial, insbesondere einem Schaumkern (22) oder einem Wabenkernmaterial, ausgefüllt ist.

23. Luftfahrzeug-Druckkabinentür (1) nach einem oder mehreren der vorhergenannten Ansprüche,
**dadurch gekennzeichnet, dass**
ein sich zwischen benachbarten Längsträgern (8; 8a bis 8f) erstreckender Bereich der Außenhaut (4) sandwichartig aufgebaut ist und einen Sandwichkern, insbesondere einen Schaumkern oder einen Wabenkern, aufweist, der auf einer Innenseite einer äußeren Deckschicht der Sandwichstruktur der Außenhaut (4) angebracht ist.

24. Luftfahrzeug-Druckkabinentür (1) nach einem oder mehreren der vorhergenannten Ansprüche,
**dadurch gekennzeichnet, dass**
diese eine gasdicht mit der integralen Türstruktur-Einheit (2) verbundene Innenhaut (28) aus Faserverbundwerkstoff besitzt, welche die Luftfahrzeug-Druckkabinentür (1) in einem in das Luftfahrzeug eingebauten Zustand gegenüber einer Umgebungsatmosphäre abdichtet und welche zwischen jeweils zwei benachbarten Längsträgern (8)
und/oder
einem benachbarten Längsträger (8) und einem benachbarten Randträger
und/oder
zwei benachbarten Randträgern (6a, 6b)
einen gewölbeartig geformten, Kabineninnendruck (pᵢ) abtragenden Druckschalenabschnitt (28a) besitzt, der sich ausgehend von der TürInnenseite in Tiefenrichtung (Z) zur Tür-Außenseite hin wölbt.

25. Luftfahrzeug-Druckkabinentür (1) nach einem oder mehreren der vorhergenannten Ansprüche,
**dadurch gekennzeichnet, dass**
ein jeweiliger Druckschalenabschnitt (28a) mit seinen Randbereichen (28a1) jeweils flächig
- mit einem jeweils zugeordneten Längsträger (8) und/oder
- mit einem jeweils zugeordneten Randträger verbunden (V1) ist.

26. Luftfahrzeug-Druckkabinentür (1) nach einem oder mehreren der vorhergenannten Ansprüche,
**dadurch gekennzeichnet, dass**
sich ein jeweiliger Druckschalenabschnitt (28a) bis auf die Innenseite der Außenhaut (4) wölbt.

27. Luftfahrzeug-Druckkabinentür (1) nach einem oder mehreren der vorhergenannten Ansprüche,
**dadurch gekennzeichnet, dass**
ein Scheitelbereich des bis auf die Innenseite der Außenhaut (4) gewölbten Druckschalenabschnitts (28a) mit der Innenseite verbunden (V2) ist.

28. Luftfahrzeug-Druckkabinentür (1) nach einem oder mehreren der vorhergenannten Ansprüche,
**dadurch gekennzeichnet, dass**
die Außenhaut (4) und wenigstens ein Teilbereich der Außenseite des jeweiligen Druckschalenabschnitts (28a) sowie
- ein zugeordneter Längsträger (8), und/oder
- ein zugeordneter Randträger
einen auf der Außenseite der Innenhaut (28) befindlichen, gegenüber der Kabineinnenseite der Luftfahrzeug-Druckkabinentür (1) gasdichten Hohlraum (30) begrenzen und mindesten eine Druckausgleichsöffnung (32) in der Außenhaut (4) vorgesehen ist, die in diesen Hohlraum (30) mündet.

## Claims

1. An aircraft pressurised cabin door (1) that has a height (X), width (Y) and depth direction (Z), **characterised in that** it comprises:
an integral door structure unit (2) made of fibre composite and is provided with an outer skin (4) as well as a door frame located on the internal face of the outer skin (4). The door frame encompasses edge supports (6a, 6b) and longitudinal beams (8; 8a to 8f) as essential supporting elements, the longitudinal beams (8a to 8f) extending in the horizontal direction (Y) between the edge supports (6a, 6b).
Intermediate spaces (2a) of the door frame, which are delimited by the internal face of the outer skin (4), the edge supports (6a, 6b) and the longitudinal beams (8; 8a to 8f), are configured in an open manner towards the internal face of the door.

2. Aircraft pressurised cabin door (1) according to claim 1,
**characterised in that**
the fibre composite is a carbon fibre composite.

3. Aircraft pressurised cabin door (1) according to claim 1 or 2,
**characterised in that**
the fibre composite contains additional fibres, which are selected from a group of secondary fibres, comprising: glass fibres, aramide fibres, boron fibres.

4. Aircraft pressurised cabin door (1) according to one or more of the preceding claims,
**characterised in that**
the door frame, in addition to the edge supports (6a, 6b), encompasses only the longitudinal beams (8; 8a to 8f) as essential supporting elements, the longitudinal beams (8a to 8f) extending in the horizontal direction (Y) of the door.

5. Aircraft pressurised cabin door (1) according to one or more of the preceding claims,
**characterised in that**
at least one (8b, 8e) of the longitudinal beams (8a to 8f) is arcuately curved or bent in the height direction (X).

6. Aircraft pressurised cabin door (1) according to one or more of the preceding claims,
**characterised in that**
at least one door frame segment (24) extending essentially in the height direction (X) is located between two neighbouring longitudinal beams (8a, 8b; 8d, 8e); this segment is attached to both these neighbouring longitudinal beams (8a, 8b; 8d, 8e) and the outer skin (4) and improves the lateral stability of the longitudinal beams (8a, 8b; 8d, 8e).

7. Aircraft pressurised cabin door (1') according to one or more of the preceding claims,
**characterised in that**
at least one door frame segment (24) is an integral part of the door structure unit (2).

8. Aircraft pressurised cabin door (1) according to one or more of the preceding claims,
**characterised in that**
at least one door frame segment (24) is a differential component, which is attached to the two neighbouring longitudinal beams (8a, 8b; 8d, 8e) and the outer skin (4) by means of a specific adhesive agent.

9. Aircraft pressurised cabin door (1) according to one or more of the preceding claims,
**characterised in that**
a window frame structure is configured integrally in the door structure unit (2) between two neighbouring longitudinal beams (8; 8a to 8t).

10. Aircraft pressurised cabin door (1) according to one or more of the preceding claims,
**characterised in that**
the door structure unit (2) has a number of integral rib-like outer skin bracings (26), which extend starting from a longitudinal beam (8a to 8f) to the internal face of the outer skin (4).

11. Aircraft pressurised cabin door (1) according to one or more of the preceding claims,
**characterised in that**
the door structure unit (2) has a fibre composite layer sequence, which comprises the following layers of fibre composite when viewing the door (1) in a cross-section in the height direction (X):
- at least one outer top layer (L_{A}), which forms an outer area of the outer skin (4); and
- several single or multi-layered inner layers (L_{I}) located next to each other on the internal face of the outer top layer (L_{A}) in the height direction (X) of the door (1). These inner layers have one cross-section that is primarily U-shaped, which has a base (L_{I-1}) and at least two lateral sides (L_{I-2}; L_{I-3}; L_{D}),
where
-- the base (L_{I-1}) is attached two-dimensionally to the internal face of the outer top layer (L_{A} and forms an inner area of the outer skin (4), and
-- at least one of the lateral sides (L_{I-2}; L₊₃; L_{D}) is attached two-dimensionally to a longitudinal beam (8; 8a to 8f) and/or an edge support (6a, 6b) and forms at least one sub-area of the same.

12. Aircraft pressurised cabin door (1) according to one or more of the preceding claims,
**characterised in that**
at least two neighbouring lateral sides (L_{I-2}; L_{D}) of two neighbouring inner layers (L_{I}) are attached two-dimensionally to a longitudinal beam (8; 8a to 8f) located in between and form at least a sub-area (10, 12) of the same.

13. Aircraft pressurised cabin door (1) according to one or more of the preceding claims,
**characterised in that**
-- at least one of the longitudinal beams (8; 8a to 8f) has a T-shaped cross-section with a bar (10) attached to the outer skin (4) and a belt (12) attached to that end of the bar (10), which is away from the outer skin (4);
-- at least two neighbouring lateral sides (L_{I-2}) of two neighbouring inner layers (Li) are interlinked two-dimensionally and together form at least one important segment of the bar (10); and
-- the free ends (12a, 12b) of both the sides (L_{I-2}) away from the outer skin (4), which form the bar (10), are bent in opposite direction and together form the belt (12).

14. Aircraft pressurised cabin door (1) according to claim 13,
**characterised in that**
a strip-type fibre composite top layer (14) is located on the belt (12), which integrally interlinks both the free ends (12a, 12b) of both the sides (L_{I-2}) bent in the opposite direction.

15. Aircraft pressurised cabin door (1) according to one or more of the claims 12 to 14
**characterised in that**
a unidirectional fibre arrangement (16) extending in the longitudinal direction (Y) of the longitudinal beam (8; 8a to 8f) is provided between the top layer (14) and the free ends (12a, 12b) of the side (L_{I-2}) bent in the opposite direction.

16. Aircraft pressurised cabin door (1) according to claim 11
**characterised in that**
a unidirectional fibre arrangement (16) is provided between at least one outer top layer (L_{A}) and a base area of the longitudinal beam (8; 8a to 8f) attached to this top layer (L_{A}) 15.

17. Aircraft pressurised cabin door (1) according to one or more of the preceding claims,
**characterised in that**
a side (L_{I-3}) of at least one of the inner layers (L_{I}), which has the cross-section that is primarily U-shaped, forms at least a sub-area (20) of an inner lateral wall of an edge support (6a, 6b).

18. Aircraft pressurised cabin door (1) according to claim 17
**characterised in that**
the side (L_{I-3}), which forms at least the sub-area (20) of the lateral wall of the edge support (6a, 6b), is bent towards its free end (18a) away from the outer skin (4) and forms a part of a belt (18) of the edge support (6a, 6b).

19. Aircraft pressurised cabin door (1) according to one or more of the preceding claims,
**characterised in that**
a fibre composite diagonal layer (L_{ID}) is provided at a corner formed between the internal face of the outer skin (4) and an adjacent lateral area (10; 20)
-- of a longitudinal beam (8; 8a to 8f) or
-- an edge support (6a, 6b)
when viewing the door (1) in a cross-section in the height direction (X) or horizontal direction (Y); this diagonal layer interlinks the lateral area (10; 20) and the outer skin (4) and forms a hollow section (H1; H2) together with this in the corner area.

20. Aircraft pressurised cabin door (1) according to one or more of the preceding claims,
**characterised in that**
a hollow section (H1) is provided on both the sides of a base area of a longitudinal beam (8a to 8f) attached to the outer skin (4).

21. Aircraft pressurised cabin door (1) according to one or more of the preceding claims,
**characterised in that**
at least one longitudinal beam (8: 8a to 8f) has a base area extending towards the outer skin (4) when viewing the door in a cross-section in the height direction (X); this base area is attached to the outer skin (4) and forms a hollow section (H2) together with this, which is delimited at least by the outer top layer (L_{A}) as well as by two neighbouring lateral sides (L_{I-2}; L_{D}) of two neighbouring inner layers (L_{I}).

22. Aircraft pressurised cabin door (1) according to one or more of the claims 20 or 21
**characterised in that**
the hollow section (H1; H2) is filled with filling material, particularly a foam core (22) or honeycomb core material.

23. Aircraft pressurised cabin door (1) according to one or more of the preceding claims,
**characterised in that**
an area of the outer skin (4) extending between neighbouring longitudinal beams (8; 8a to 8t) has a sandwich-type structure and has a sandwich core, a foam or honeycomb core in particular, which is attached to an internal face of an outer top layer of the sandwich structure of the outer skin (4).

24. Aircraft pressurised cabin door (1) according to one or more of the preceding claims,
**characterised in that**
it has an inner skin (28) made of fibre composite attached to the integral door structure unit (2) such that it is gas-proof, which seals the aircraft pressurised door cabin (1) installed in the aircraft against the ambient atmosphere and which has a curved pressure shell section (28a) that removes internal cabin pressure (p_{I}) between two neighbouring longitudinal beams (8)
and/or
one neighbouring longitudinal beam (8) and one neighbouring edge support
and/or
two neighbouring edge supports (6a, 6b);
this section curves starting from the internal face of the door to the outer face of the door in the depth direction (Z).

25. Aircraft pressurised cabin door (1) according to one or more of the preceding claims,
**characterised in that**
a respective pressure shell section (28a) with its edge areas (28a1) is attached two-dimensionally
- to one assigned longitudinal beam (8)
and/or
- to one assigned edge support (V1).

26. Aircraft pressurised cabin door (1) according to one or more of the preceding claims,
**characterised in that**
a respective pressure shell section (28a) curves up to the internal face of the outer skin (4).

27. Aircraft pressurised cabin door (1) according to one or more of the preceding claims,
**characterised in that**
a vertex of the pressure shell section (28a) curved up to the internal face of the outer skin (4) is attached to the internal face (V2).

28. Aircraft pressurised cabin door (1) according to one or more of the preceding claims,
**characterised in that**
the outer skin (4) and at least one sub-area of the outer face of the respective pressure shell section (28a) as well as
- - an assigned longitudinal beam (8), and/or
- - an assigned edge support
delimit a gas-proof hollow (30) on the outer face of the inner skin (28), opposite to the inner cabin side of the aircraft pressurised cabin door (1) and at least one pressure compensation nozzle (32) is provided in the outer skin (4), which leads to this hollow (30).

## Revendications

1. Porte de cabine pressurisée pour aéronef (1) décrite par un système d'axes en hauteur (X), en largeur (Y) et en profondeur (Z), **caractérisée en ce qu'**elle comprend
Une unité de structure de porte intégrale (2) en matière composite renforcée par des fibres, présentant une coque externe (4) et, monté sur la face interne de la coque externe (4), un bâti de porte, lequel possède en tant qu'éléments porteurs essentiels des supports d'encadrement (6a, 6b) et des longerons (8 ; 8a à 8f) disposés dans l'axe de largeur (Y) et s'étendant entre les supports d'encadrement (6a, 6b),
sachant que des espaces intermédiaires (2a) du bâti de porte, délimités par la face interne de la coque externe (4), les supports d'encadrement (6a, 6b) et les longerons (8 ; 8a à 8f), sont ouverts dans la direction de la face interne de la porte.

2. Porte de cabine pressurisée pour aéronef (1) selon la revendication 1,
**caractérisée en ce que**
la matière composite renforcée par des fibres est un matériau composite aux fibres de carbone.

3. Porte de cabine pressurisée pour aéronef (1) selon la revendication 1 ou 2,
**caractérisée en ce que**
la matière composite renforcée par des fibres contient des fibres additionnelles choisies dans un groupe de fibres additionnelles comprenant des fibres de verre, des fibres aramide, des fibres de bore.

4. Porte de cabine pressurisée pour aéronef (1) selon une ou plusieurs des revendications précédentes,
**caractérisée en ce que**
le bâti de porte présente en tant qu'éléments porteurs essentiels, en plus des supports d'encadrement (6a, 6b), uniquement les longerons (8 ; 8a à 8f) s'étendant dans la direction de la largeur (Y) de la porte.

5. Porte de cabine pressurisée pour aéronef (1) selon une ou plusieurs des revendications précédentes,
**caractérisée en ce que**
au moins un (8b, 8e) des longerons (8 ; 8a à 8f) est cintré ou coudé dans la direction de la hauteur (X).

6. Porte de cabine pressurisée pour aéronef (1) selon une ou plusieurs des revendications précédentes,
**caractérisée en ce que**
entre deux longerons voisins (8a, 8b ; 8d, 8e) est placé au moins un segment de cadre de porte (24) s'étendant essentiellement dans le sens de la hauteur (X), qui est relié à ces deux longerons voisins (8a, 8b ; 8d, 8e) ainsi qu'à la coque externe (4), et qui augmente la stabilité transversale des longerons (8a, 8b ; 8d, 8e).

7. Porte de cabine pressurisée pour aéronef (1) selon une ou plusieurs des revendications précédentes,
**caractérisée en ce que**
au moins un segment de cadre de porte (24) est un composant intégral de l'unité de structure de porte (2).

8. Porte de cabine pressurisée pour aéronef (1) selon une ou plusieurs des revendications précédentes,
**caractérisée en ce que**
au moins un segment de cadre de porte (24) est un composant différentiel qui est relié aux deux longerons voisins (8a, 8b ; 8d, 8e) ainsi qu'à la coque externe (4) par un élément de fixation, en particulier une substance adhésive.

9. Porte de cabine pressurisée pour aéronef (1) selon une ou plusieurs des revendications précédentes,
**caractérisée en ce que**
entre deux longerons voisins (8 ; 8a à 8f) une structure de cadre de fenêtre est intégralement formée dans l'unité de structure de porte (2).

10. Porte de cabine pressurisée pour aéronef (1) selon une ou plusieurs des revendications précédentes,
**caractérisée en ce que**
l'unité de structure de porte (2) présente de multiples raidisseurs intégraux de la coque externe (26), du type nervure, qui s'étendent sur la face interne de la coque externe (4) en partant d'un longeron (8a à 8f).

11. Porte de cabine pressurisée pour aéronef (1) selon une ou plusieurs des revendications précédentes,
**caractérisée en ce que**
l'unité de structure de porte (2) possède une structure de couches de matière composite renforcée par des fibres qui comprend, lorsque l'on regarde la porte (1) en coupe dirigée dans le sens de la hauteur (X), les couches suivantes de matériau composite aux fibres :
- au moins une couche extérieure (LA) formant une zone extérieure de la coque externe (4); et
- plusieurs couches intérieures (Li), à empilement unique ou multiple, placées les unes à côté des autres sur la face interne de la couche extérieure (LA), dans le sens de la hauteur (X) de la porte (1), ayant chacune un profil essentiellement en forme de U qui présente un fond (Li-1) et au moins deux montants latéraux (Li-2; Li-3 ; LD),
- sachant que
- le fond (Li-1) est relié par la surface à la face interne de la couche extérieure (LA) et forme une zone interne de la coque externe (4), et
- au moins un des montants latéraux (Li-2; Li-3 ; LD) est relié par la surface à un longeron (8; 8a à 8f) et/ou un support d'encadrement (6a, 6b), et forme au moins une partie de celui-ci.

12. Porte de cabine pressurisée pour aéronef (1) selon une ou plusieurs des revendications précédentes,
**caractérisée en ce que**
à chaque fois, deux montants latéraux voisins (Lᵢ₋₂; L_{D}) de deux couches internes voisines (Lᵢ) sont reliés par la surface à un longeron placé entre eux (8; 8a à 8f) et forment au moins une partie (10, 12) de celui-ci.

13. Porte de cabine pressurisée pour aéronef (1) selon une ou plusieurs des revendications précédentes,
**caractérisée en ce que**
- au moins un des longerons (8; 8a à 8f) possède un profil en T avec une traverse (10) reliée à la coque externe (4) ainsi qu'une semelle (12) placée à l'extrémité de la traverse (10) qui est opposée à la coque externe (4);
- à chaque fois, deux montants latéraux voisins (Li-2) de deux couches internes voisines (Li) sont reliés entre eux par la surface et forment ensemble au moins une portion essentielle de la traverse (10); et
- les extrémités libres (12a, 12b), opposées à la coque externe (4), des deux montants latéraux (Li-2) qui forment la traverse (10), sont cintrées en opposition et forment ensemble la semelle (12).

14. Porte de cabine pressurisée pour aéronef (1) selon la revendication 13
**caractérisée en ce que**
sur la semelle (12) est placée une bande de revêtement de matériau composite renforcé par des fibres (14) qui relie intégralement ensemble les deux extrémités libres cintrées en opposition (12a, 12b) des deux montants latéraux (Lᵢ₋₂)

15. Porte de cabine pressurisée pour aéronef (1) selon une ou plusieurs des revendications 12 à 14,
**caractérisée en ce que**
entre le revêtement (14) et les deux extrémités libres cintrées en opposition (12a, 12b) des montants (Lᵢ₋₂), un arrangement unidirectionnel de fibres (16) s'étendant dans le sens de la longueur (Y) du longeron (8; 8a à 8f) est prévu.

16. Porte de cabine pressurisée pour aéronef (1) selon la revendication 11
**caractérisée en ce que**
entre au moins une couche extérieure (L_{A}) et une zone de base du longeron (8; 8a à 8f) correspondant à cette couche externe (L_{A}), un arrangement unidirectionnel de fibres (16) est prévu.

17. Porte de cabine pressurisée pour aéronef (1) selon une ou plusieurs des revendications précédentes,
**caractérisée en ce que**
un montant (Lᵢ₋₃) d'au moins une des couches internes (Lᵢ), qui présente un profil essentiellement en U, forme au moins une partie (20) d'une paroi latérale interne d'un support d'encadrement (6a, 6b).

18. Porte de cabine pressurisée pour aéronef (1) selon la revendication 17
**caractérisée en ce que**
le montant (Lᵢ₋₃) qui forme au moins la partie (20) de la paroi latérale du support d'encadrement (6a, 6b) a son extrémité libre (18a) opposée à la coque externe (4) cintrée et forme une partie d'une semelle (18) du support d'encadrement (6a, 6b).

19. Porte de cabine pressurisée pour aéronef (1) selon une ou plusieurs des revendications précédentes,
**caractérisée en ce que**
si l'on considère la porte (1) en coupe dans le sens de la hauteur (X) ou de la largeur (Y) au niveau d'un angle formé entre la face interne de la coque externe (4) et une surface latérale voisine (10; 20)
- d'un longeron (8; 8a à 8f) ou
- d'un support d'encadrement (6a, 6b),
une couche en diagonale de matériau composite renforcé aux fibres (L_{D}) est prévue, qui relie la surface latérale voisine (10; 20) avec la coque externe (4) et forme avec celle-ci, dans la zone d'angle, un profil creux (H1; H2).

20. Porte de cabine pressurisée pour aéronef (1) selon une ou plusieurs des revendications précédentes,
**caractérisée en ce que**
un profil creux (H1) est prévu des deux côtés d'une zone de base d'un longeron (8a à 8f) au niveau de la coque externe (4).

21. Porte de cabine pressurisée pour aéronef (1) selon une ou plusieurs des revendications précédentes,
**caractérisée en ce que**
si l'on considère la porte (1) en coupe dans le sens de la hauteur (X), au moins un longeron (8; 8a à 8f) présente une zone de base s'étendant vers la coque externe (4) et reliée à elle, et forme avec celle-ci un profil creux (H2), lequel est délimité au moins par la couche extérieure (L_{A}) ainsi que, à chaque fois, par deux montants latéraux (Lᵢ₋₂; L_{D}) de deux couches internes voisines (Lᵢ).

22. Porte de cabine pressurisée pour aéronef (1) selon une ou plusieurs des revendications 20 ou 21,
**caractérisée en ce que**
le profil creux (H1; H2) est rempli d'un matériau de remplissage, en particulier d'un noyau en mousse (22) ou d'une structure alvéolaire.

23. Porte de cabine pressurisée pour aéronef (1) selon une ou plusieurs des revendications précédentes,
**caractérisée en ce que**
une zone de la coque externe (4) s'étendant entre des longerons voisins (8; 8a à 8f) est construite en sandwich et présente une structure en sandwich, en particulier un noyau en mousse ou une structure alvéolaire, qui est appliquée sur une face interne d'une couche extérieure de la structure en sandwich de la coque externe (4).

24. Porte de cabine pressurisée pour aéronef (1) selon une ou plusieurs des revendications précédentes,
**caractérisée en ce que**
celle-ci possède une coque interne (28) en matériau composite renforcé avec des fibres, étanche aux gaz, et reliée à l'unité intégrale de structure de porte (2), laquelle coque réalise l'étanchéité de la porte de cabine pressurisée pour aéronef (1) contre l'atmosphère extérieure lorsque la porte est montée sur l'aéronef, et qui présente à chaque fois entre deux longerons voisins (8)
et/ou
entre un longeron voisin (8) et un support d'encadrement voisin
et/ou
entre deux supports d'encadrement voisins (6a, 6b),
une portion de coque de pression (28a) cintrée, supportant la pression intérieure de la cabine (pᵢ), qui s'étend de la face interne de la porte vers la face externe de la porte dans le sens de la profondeur (Z).

25. Porte de cabine pressurisée pour aéronef (1) selon une ou plusieurs des revendications précédentes,
**caractérisée en ce que**
chaque portion de coque de pression (28a) avec ses zones de bordure (28a1) est à chaque fois reliée par la surface (V1)
- avec un longeron (8) correspondant
et/ou
- avec un support d'encadrement correspondant.

26. Porte de cabine pressurisée pour aéronef (1) selon une ou plusieurs des revendications précédentes,
**caractérisée en ce que**
chaque portion de coque de pression (28a) est cintrée et s'étend jusqu'à la face interne de la coque externe (4).

27. Porte de cabine pressurisée pour aéronef (1) selon une ou plusieurs des revendications précédentes,
**caractérisée en ce que**
une zone de rebroussement de la portion de coque de pression (28a) cintrée et s'étendant jusqu'à la face interne de la coque externe (4) est reliée (V2) à la face interne.

28. Porte de cabine pressurisée pour aéronef (1) selon une ou plusieurs des revendications précédentes,
**caractérisée en ce que**
la coque externe (4) et au moins une partie de la face externe de chaque portion de coque de pression (28a), ainsi que
- un longeron (8) correspondant, et/ou
- un support d'encadrement correspondant,
délimitent un espace creux (30) étanche aux gaz, situé sur la face externe de la coque interne (28), face au côté intérieur cabine de la porte de cabine pressurisée pour aéronef (1), et au moins une ouverture de compensation de pression (32) est prévue dans la coque externe (4) débouchant dans cet espace creux (30).
